# EUROPEAN PATENT SPECIFICATION

(11) **EP 3 875 441 B1**
(45) Date of publication and mention of the grant of the patent: **23.07.2025**
(21) Application number: 19877618.9
(22) Date of filing: 28.10.2019
(51) Int. Cl.: C03C 27/06, E06B 3/663, E06B 3/67, C03C 27/10

(54) **DOUBLE-GLAZED GLASS, METHOD FOR PRODUCING SAME AND SEALING MATERIAL FOR DOUBLE-GLAZED GLASS**
DOPPELVERGLASUNG UND VERFAHREN ZUR HERSTELLUNG DAVON SOWIE DICHTUNGSMATERIAL FÜR DOPPELVERGLASUNGEN
VERRE À DOUBLE VITRAGE, SON PROCÉDÉ DE PRODUCTION, ET MATÉRIAU D'ÉTANCHÉITÉ POUR VERRE À DOUBLE VITRAGE

(30) Priority: 31.10.2018 JP 2018205999
(43) Date of publication of application: 08.09.2021
(73) Proprietor: AGC INC., Chiyoda-ku, Tokyo 1008405 (JP)
(72) Inventor: SHIBUYA, Takashi, Tokyo 100-8405 (JP); HASHIGUCHI, Yuri, Tokyo 100-8405 (JP)
(74) Representative: Müller-Boré & Partner Patentanwälte PartG mbB
(86) International application number: PCT/JP2019/042143
(87) International publication number: WO 2020/090721

(56) References cited:
- WO-A1-2005/108322
- CN-A- 105 385 388
- JP-A- 2008 031 270
- JP-A- H10 110 072
- JP-A- H10 114 551
- JP-A- H10 238 235

## Description

### TECHNICAL FIELD

The present invention relates to an insulating glass unit and a method of manufacturing the same, and a sealing material for an insulating glass unit.

### BACKGROUND ART

Conventionally, in insulating glass including two or more sheets of glass that are spaced apart via only a spacer so that an air space layer is formed therebetween, insulating glass is known in which the spacer is made from a thermoplastic resin composition having a JIS A hardness of 10 to 90 at 25 °C, and the thermoplastic resin composition contains a butyl-type rubber, a crystalline polyolefin, a desiccant, and an inorganic filler, wherein a percentage of the butyl-type rubber with respect to the total amount of the butyl-type rubber and the crystalline polyolefin is 50 to 98% by weight, the percentage of crystalline polyolefin is 2 to 50% by weight, and the percentage of inorganic filler with respect to the total amount of the butyl-type rubber and the crystalline polyolefin is 200 or less (See, for example, Patent Document 1).
Further, Patent Document 2 describes a thermoplastic elastomer composition allegedly excellent in rubber elasticity, mechanical strength, flexibility and heat resistance, and a molded article thereof.
Patent Document 3 describes a single-sealed multilayer transparent unit, particularly a single-sealed doubleglazing glass, wherein as a spacer, only an elastomer spacer is used which contains, as the matrix component, at least one butyl elastomer component selected from the group consisting of polyisobutylene, butyl rubber and modified butyl rubber, and a process for its production.
Patent Document 4 describes a double glazing.

According to the insulating glass above, by using the thermoplastic resin composition having the JIS A hardness of 10 to 90 at 25 °C as the spacer, the complication of the manufacturing process when the metal spacer is used can be solved, and the problem of a long time curing necessary to use a room temperature curable sealant can be solved, thereby improving the productivity.

### PRIOR ART DOCUMENTS

### PATENT DOCUMENTS

Patent Document 1: Japanese Unexamined Patent Application Publication No. H10-114551
Patent Document 2: JP 2008 031270 A
Patent Document 3: WO 2005/108322 A1
Patent Document 4: JP H10 238235 A

### SUMMARY OF THE INVENTION

### PROBLEM TO BE SOLVED BY THE INVENTION

However, when manufacturing the insulating glass unit disclosed in Patent Document 1, if any spacer material is selected, the surface of the spacer material may have roughness, which is not necessarily preferable from the viewpoint of the adhesion between the spacer and the glass sheets.

Accordingly, the present invention is intended to provide an insulating glass unit, a method of manufacturing an insulating glass unit, and a sealing material for an insulating glass unit that have good adhesion between the spacer and the glass sheet and can increase long-term reliability.

### MEANS FOR SOLVING THE PROBLEM

In order to achieve the above-described object, an insulating glass unit of one embodiment of present invention includes two or more glass sheets disposed to face each other via a spacer interposed between the glass sheets so as to form an air space layer between the glass sheets, characterized in that the spacer is formed of a thermoplastic resin composition having a JIS A hardness of 10 to 90 at 25 °C, the thermoplastic resin composition containing a butyl type rubber, a crystalline polyolefin, a desiccant and an inorganic filler, a percentage of the butyl type rubber is 90 to 100 mass%, and a percentage of the crystalline polyolefin is 1 to 10 mass% with respect to a total amount of the butyl type rubber and the crystalline polyolefin, a proportion of the inorganic filler is 200 parts by mass or less with respect to a total of 100 parts by mass of the butyl type rubber and the crystalline polyolefin, and a percentage of dispersion defined by ISO 11345:2006 E method is 25% or more, wherein the butyl type rubber contains a high molecular weight butyl type rubber and a low molecular weight butyl type rubber, the high molecular weight butyl type rubber has a number average molecular weight of 55000 or more and 150000 or less, and the low molecular weight butyl type rubber has a number average molecular weight of 35000 or more and 50000 or less.

### ADVANTAGEOUS EFFECT OF THE INVENTION

According to the present invention, adhesion between a spacer and a glass sheet can be improved, and long-term reliability of an insulating glass unit can be improved.

### BRIEF DESCRIPTION OF THE DRAWINGS

FIG. 1 is a partial schematic cross-sectional view illustrating an example of a structure of insulating glass unit according to a first embodiment of the present invention;
FIG. 2 is a diagram showing an example of insulating glass according to a second embodiment of the present invention;
FIG. 3 is a diagram showing an example of an insulating glass unit 12 according to a third embodiment of the present invention;
FIG. 4 is a diagram for explaining a fire resistance test method according to ISO 834-1:1999;
FIG. 5 is an elevation view showing a fire resistance test in accordance with ISO 834-1:1999;
FIG. 6 is a graph showing a heating curve according to ISO 834-1:1999;
FIG. 7 is a diagram showing an insulating glass unit including a Low-E glass sheet disposed on a heating side and a wired glass sheet disposed on a non-heated side;
FIG. 8 is a diagram showing an insulating glass unit including a Low-E glass sheet disposed on a non-heated side and a wired glass on a heated side;
FIG. 9 is a diagram showing an example of a glass sheet arrangement process in a method of manufacturing an insulating glass unit;
FIG. 10 is a diagram showing an example of an extruder;
FIG. 11 is a schematic cross-sectional view showing a method of measuring creep compliance J;
FIG. 12 is a table showing the composition of examples 1 to 5 (3 and 4 for reference only) and comparative examples 1 and 2;
FIG. 13 is a table showing overall compositions shown in

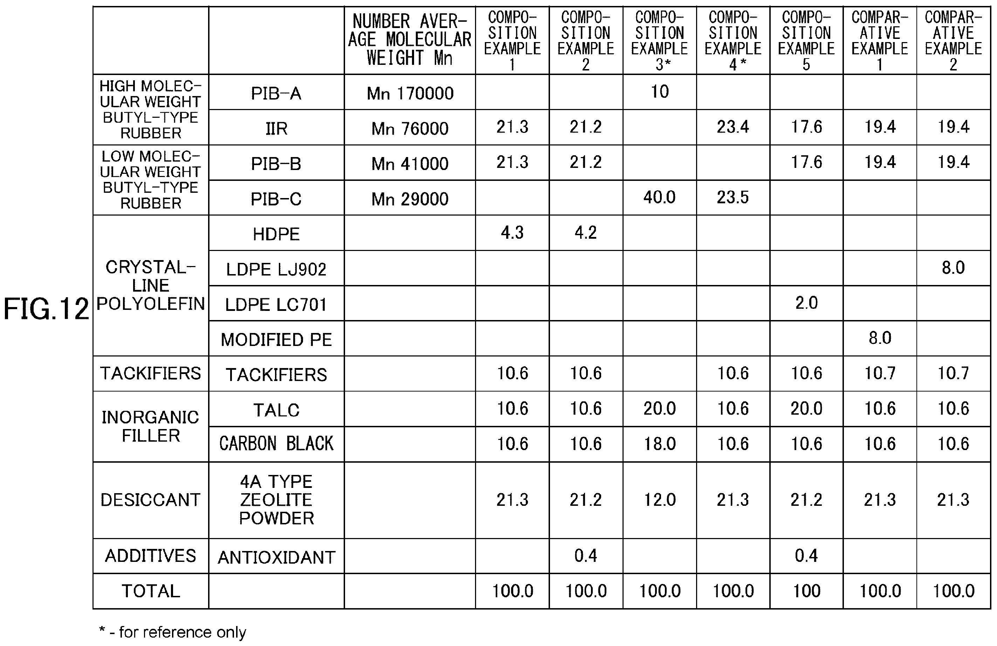

FIG. 12 in terms of ratio of butyl type rubber to crystalline polyolefin;

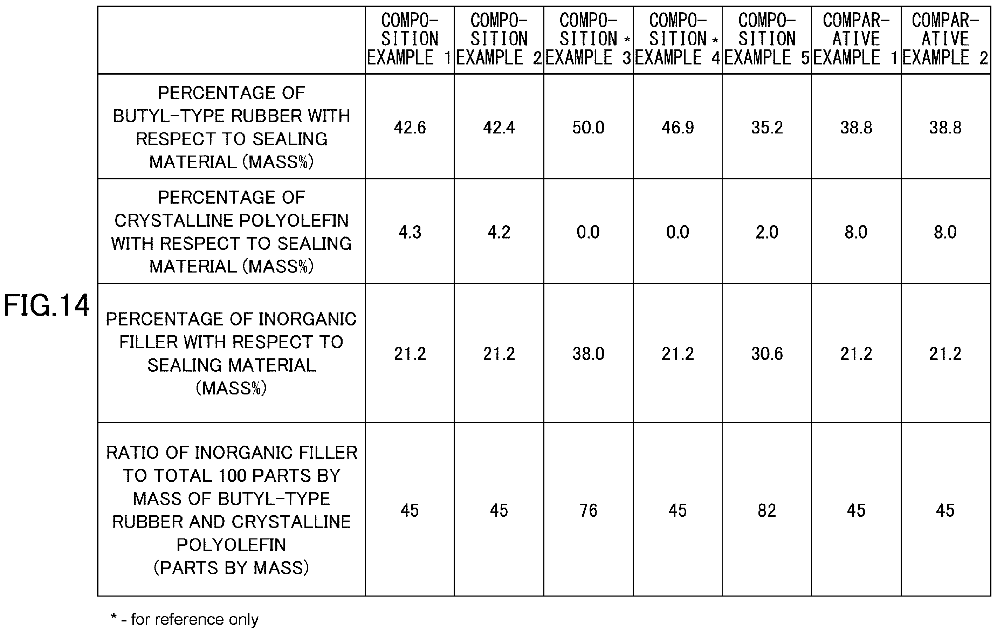

FIG. 14 is a table showing a proportion of an inorganic filler with respect to total 100 mass parts of the butyl type rubber and the crystalline polyolefin regarding the total composition shown in FIG. 12 in terms of mass part;

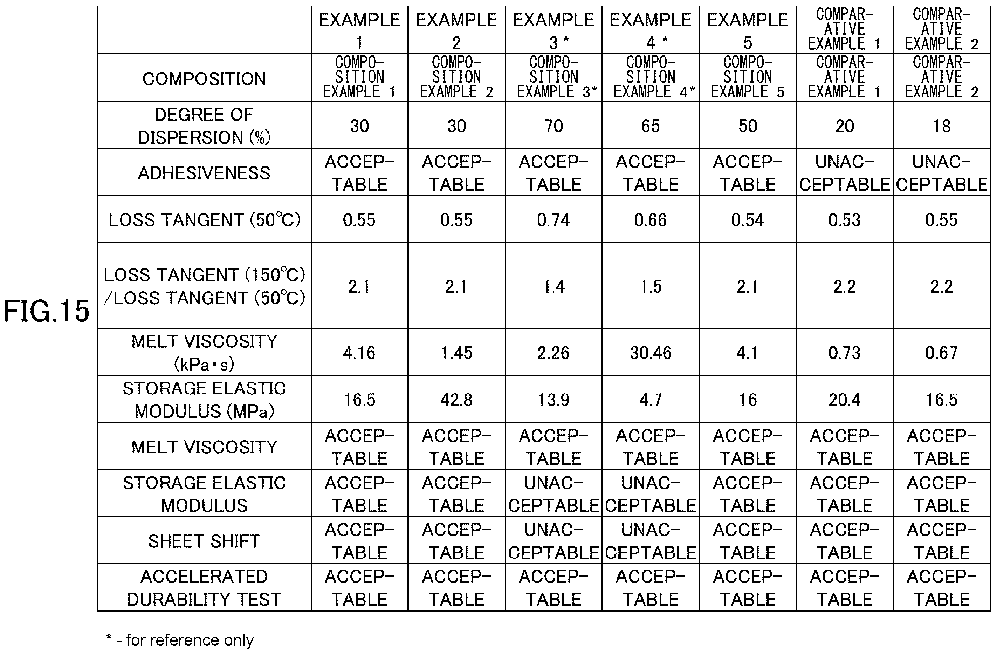

FIG. 15 is a table showing evaluation results of the examples 1 to 5 (3 and 4 for reference only) and the comparative examples 1 to 2;

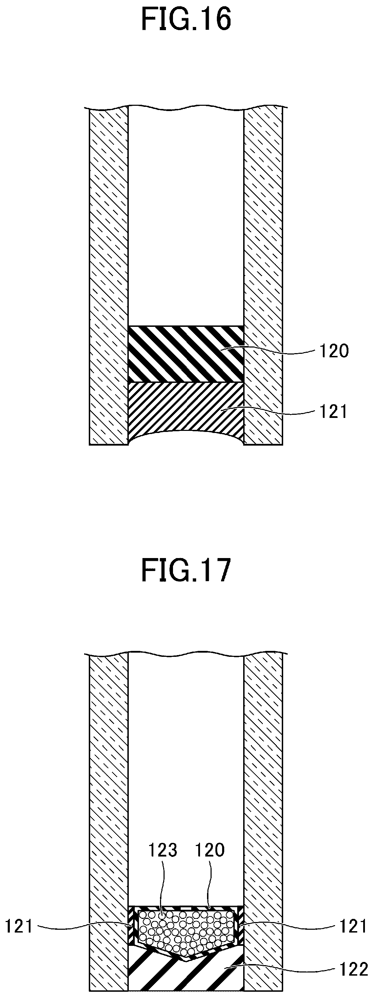

FIG. 16 is a cross-sectional view showing a structure of an insulating glass unit in accordance with the comparative example 3; and
FIG. 17 is a cross-sectional view showing a structure of an insulating glass unit in accordance with the comparative example 4.

### EMBODIMENTS FOR CARRYING OUT THE INVENTION

Hereinafter, embodiments for carrying out the present invention will be described with reference to the drawings.

### [First Embodiment]

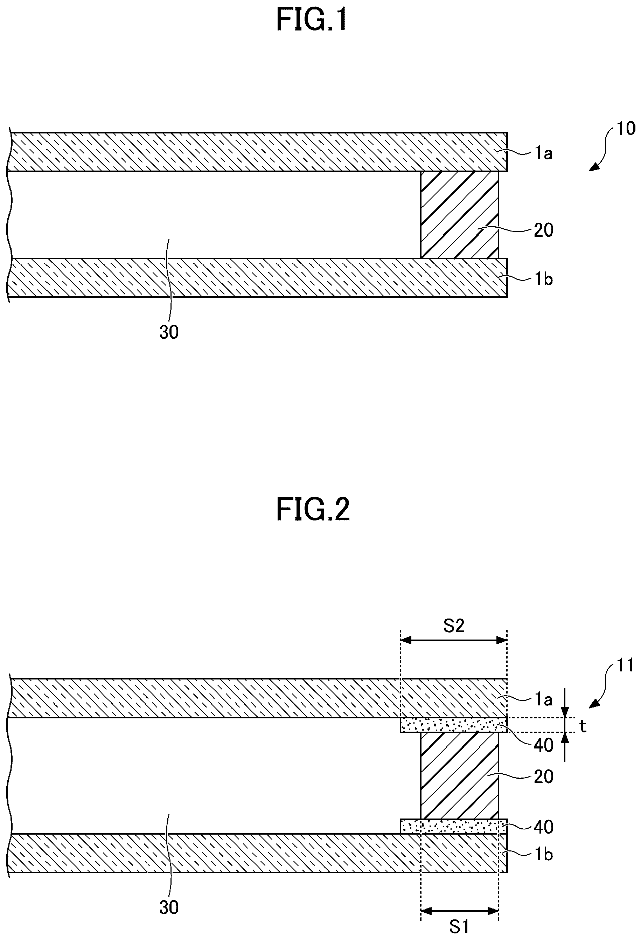

FIG. 1 is a partial schematic cross-sectional view illustrating an example of a structure of insulating glass according to a first embodiment of the present invention. As shown in FIG. 1, insulating glass 10 is held at a predetermined distance by only a spacer 20 such that two glass sheets 1a and 1b form an air space layer 30 therebetween. The spacer 20 is formed of a thermoplastic resin composition having a JIS A hardness of 10 to 90 and a dispersion degree of 25% or more. The dispersion is defined by ISO 11345:2006 E method. The term "by only a spacer 20" used above means that a secondary sealant, a metal spacer and the like are not required, and that a primer process that is applied if necessary is included.

The melt viscosity is the viscosity at 120 °C and at a shear rate of 100/s measured according to the method defined in JIS K 7199 (1999) using a capillary having a capillary length of 10 mm and a capillary diameter of 2 mm, and a capillary rheometer having a furnace with a furnace body diameter of 9.55 mm.

The thermoplastic resin composition used for the spacer material in the configuration of the insulating glass unit according to the first embodiment of the present invention is a thermoplastic resin composition having JIS A hardness of 10 to 90 at 25 °C. Any of the thermoplastic resin compositions may be used as long as the resin composition has the above-described properties and the degree of dispersion defined in the ISO 11345:2006 E method is 25% or more.

In FIG. 1, the insulating glass unit 10 includes the spacer 20 between two opposing glass sheets 1a and 1b. However, when the surface of the spacer 20 has roughness, the insulating glass unit 10 is not necessarily preferable from the viewpoint of adhesiveness of the spacer 20 to the glass sheets 1a and 1b.

When the dispersion degree of the thermoplastic resin composition used in the spacer material defined by the ISO 11345:2006 E method is 25% or more, the surface of the spacer material becomes flat; the spacer 20 preferably has some adhesiveness to the glass sheets 1a and 1b; and the long-term reliability of the insulating glass unit can be improved. The dispersion degree is preferably 30% or more, more preferably 35% or more, and more and more preferably 40% or more. The upper limit of the dispersion degree is not particularly limited, but may be 100% or less and may be 98% or less. To increase the dispersion degree, there are methods for reducing the proportion of crystalline polyolefins with respect to the thermoplastic composition, and for lengthening the kneading time of a butyl type rubber, a crystalline polyolefin, and an inorganic filler as described below.

Next, various examples of specific thermoplastic resin compositions that can be used for the insulating glass unit 10 in accordance with the present embodiment will be described below.

For example, thermoplastic elastomers used in many applications in recent years and rubber-based materials in which the vulcanization density is adjusted to be able to melt and flow by heating, are included in the "thermoplastic resin composition" of the present invention as long as they have the above-described properties. Furthermore, the thermoplastic resin compositions including so-called plasticizers such as dibutylphthalate and di-2-ethylhexylphthalate are also included in the "thermoplastic resin compositions" of the present invention as long as they have the above-described properties.

Specifically, the resin composition used in the present invention preferably contains at least one of thermoformable rubber, elastomer and thermoplastic resin other than the rubber or elastomer described above, more preferably containing both. The resin composition is preferably made from a low moisture permeable rubber, an elastomer, or a thermoplastic. Further, a resin composition preferably incorporates a predetermined amount of desiccant in order to prevent moisture from entering the air space layer of the insulating glass when the insulating glass unit is formed.

The low moisture permeable and thermoformable rubber or elastomer includes a rubber or elastomer preferably having the moisture vapor permeable coefficient of 3000×10⁻¹³ cm³·cm/cm²·sec·Pa or less, and a butyl-type rubber, such as a copolymer mainly comprised of isobutylene and isoprene, a polyisobutylene, a butyl-type rubber, such as a polyisobutylene or a butyl halide rubber, is preferable. These low moisture permeable and thermoformable rubbers or elastomers may be used alone or used in two or more blends.

The low moisture permeable and thermoplastic resin other than the rubber or elastomer described above includes, for example, polyethylene, polypropylene, vinylidene chloride, polyvinyl chloride and the like, a copolymer of a monomer containing these polymers, or a modified form thereof, and a crystalline polyolefin is preferred, and particularly polyethylene is preferred. The water vapor permeable coefficient of these thermoplastic resins is preferably 3000×10⁻¹³ cm³·cm/cm² sec·Pa or less, and further preferably 500×10⁻¹³·cm³·cm/cm²·sec·Pa or less. The thermoplastic particularly contributes to the shape-retaining performance of the spacer.

A desiccant is added, or further an inorganic filler or another additive is added as necessary, to the resin composition for the spacer according to the first embodiment of the present invention in addition to the low moisture permeable and thermoformable rubber or elastomer described above, or another low moisture permeable and thermoformable rubber or elastomer other than the rubber or elastomer described above. As a desiccant, any desiccant used in admixture with a conventional insulating glass's spacer or sealant may be used such as zeolite, alumina and silica gel.

Such a resin composition for a spacer preferably contains the above ingredients and may contain tackifiers, lubricants, pigments, antistatic agents, antiaging agents, thermal stabilizers, fillers, blowing agents and the like as additives as necessary.

The resin composition for the spacer is adjusted by kneading the ingredients. In adjusting the resin composition, it is important to combine the necessary ingredients so that the hardness of JIS A at 25 °C or less becomes 90 or less. The reasons for setting the hardness to 90 or less are as follows.

When a thermoplastic resin composition having a hardness of JIS A over 90 is used as a spacer for insulating glass unit, because creep hardly occurs, if the endurance test shown in JIS R 3209 is performed, the stress caused by the expansion of air is applied to the adhesion interface of the glass sheet and the spacer at a high temperature. For this reason, if the adhesion is insufficient, peeling occurs, and even if the adhesion is secured, the glass may break. Although it is possible to obtain adhesive strength sufficient to withstand the expansive stress of the air space layer by applying high temperatures or high pressures to the adhesive currently known, it does not suit to the present invention's objective of reducing manufacturing costs because high temperatures and high pressures cause breakage of the glass and greatly decrease productivity. In addition, the properties are inappropriate as an insulating glass unit because the insulating glass unit is likely to break in the actual use environment.

On the other hand, if the hardness is too low, problems arise in shape retention properties of the insulating glass. Therefore, it is important to add the required ingredients to the resin composition so that the hardness of JIS A at 25 °C of the resin composition becomes 10 or higher. Furthermore, when the hardness of JIS A is 10 or more but the hardness is relatively small, if the air space layer 30 is thick, misalignment between the glass sheets 1a and 1b (which is hereinafter referred to as "sheet misalignment") may occur.

Commonly used insulating glass unit has an air space layer 30 with a thickness of about 4 to 18 mm (often 6 mm or 12 mm). Accordingly, when the hardness is relatively small, sheet misalignment may not occur when the thickness of the air space layer is 6 mm, but when the thickness is 12 mm, the sheet misalignment may occur. By increasing the hardness to 40 or more, it is possible to prevent the sheet from shifting even if the thickness of the air space layer is 12 mm. Therefore, it is particularly preferable that the JIS A hardness of the thermoplastic spacer be 40 or more in the insulating glass according to the present invention.

An insulating glass, which uses a resin composition with JIS A hardness over 90 as a spacer, causes great stresses on a glass sheet. Therefore, during the accelerated durability test, glass breakage occurs in both insulating glass units with a thickness of 5 mm and a thickness of 3 mm as defined in JIS R 3209.

In contrast compared to the above, the insulating glass unit using the resin composition with JIS A hardness of 90 as a spacer does not break the glass sheet in the insulating glass unit using the glass sheet with a thickness of 5 mm in the above test. In the meantime, an insulating glass unit using 3 mm thick glass sheets may cause a glass breakage in the above test. Therefore, the upper limit of the JIS A hardness of the resin composition for the spacer is 90. Moreover, in the above test, a glass breakage does not occur in the insulating glass unit using the resin composition with JIS A hardness of 75 as a spacer and glass sheets with a thickness of 5 mm and a thickness of 3 mm. The JIS A hardness of the resin composition for the spacer is preferably in a range of 40 to 75, because the glass sheet for an insulating glass unit, which is currently commonly used, is 3 mm thick.

Whereas the stipulation of JIS A hardness is instantaneous, creep compliance J, which indicates creep characteristics, shows the properties of the resin when continuous stress is applied, and is expressed as the inverse of the elastic modulus. The creep compliance J is measured as follows, for example.

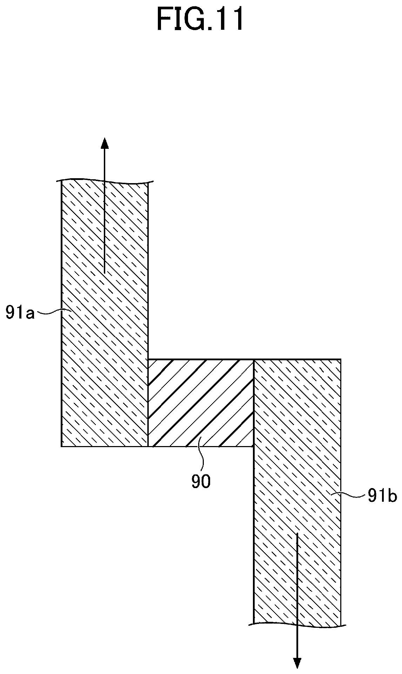

FIG. 11 is a schematic cross-sectional view showing a method of measuring creep compliance J. The resin material 90 to be measured is shaped to have a thickness of 12 mm with a 10×50 (mm) surface size to be adhered to the glass sheets 91a and 91b. Then, the glass sheet is pulled in the direction of the arrow shown in the figure at an atmospheric temperature of 40 °C so that a stress of 0.2 kg/cm² is always applied to the resin material, and the creep compliance J is calculated from the elongated length of material after 5 minutes. The value of J does not depend on the thickness of the glass sheets 91a and 91b. Here, a glass sheet having a thickness of 5 mm is used.

For example, the insulating glass unit is adsorbed by a suction disk and the like on one side of the insulating glass and loaded onto a pallet during transport after fabrication. Conversely, when the insulating glass is removed from the pallet, it is similarly adsorbed. The so-called "Hold on one side only" state of the insulating sucker is usually considered to be 5 minutes or less. The outdoor temperature in summer rises to about 40 °C. Therefore, the creep compliance J is preferably 1×10⁻⁵ cm²/dyne or less [40 °C, shear mode, and 5 minutes after the start of measurement] in order not to cause sheet misalignment during use.

In addition, when the creep compliance J is less than 1×10⁻¹⁰ cm²/dyne at [40 °C, shear mode, and 5 minutes after the start of measurement], because the resin material does not substantially creep, the stress applied between the glass sheet and the spacer increases while causing problems such as peeling and glass breakage. Therefore, J at [40 °C, shear mode, 5 minutes after starting measurement] is preferably 1×10⁻¹⁰ cm²/dyne or more.

As described above, the thickness of the air space layer of the insulating glass is often about 4 to 18 mm. Therefore, when the creep compliance J is relatively great even if the creep compliance J is 1×10⁻⁵ cm²/dyne or less at [40 °C, shear mode, and 5 minutes after the start of measurement], the thickness of the air space layer may cause sheet misalignment. For example, when the creep compliance J is great, the sheet misalignment may occur when the air space layer 30 has a thickness of 6 mm, even if the sheet misalignment does not occur when the air space layer has a thickness of 12 mm. Therefore, by setting the creep compliance J to 1×10⁻⁶ cm²/dyne or less, even if the thickness of the air space layer 30 is 12 mm, the sheet misalignment can be prevented.

In addition, it is particularly preferable that the lower limit of creep compliance J be 1×10⁻⁹ cm²/dyne. At a value of 1×10⁻¹⁰ cm²/dyne, for example, in the endurance test defined in JIS R 3209, even if an insulating glass unit using a glass sheet with a thickness of 5 mm does not break, an insulating glass unit using a glass sheet with a thickness of 3 mm may break. Therefore, it is particularly preferable that the lower limit of creep compliance J is 1×10⁻⁹ cm²/dyne at [40 °C, shear mode, and 5 minutes after the start of measurement] so as not to cause a breakage of the glass sheet in the glass sheets of various thicknesses.

Taken together with the above, it is particularly preferable that the resin composition used for the spacer according to the present invention has a JIS A hardness of 40 to 75 and a creep compliance J of 1×10⁻⁶ to 1×10⁻⁹ cm²/dyne at [40 °C, shear mode, and 5 minutes after the start of measurement].

In addition, it is preferable that the water vapor permeable coefficient of the resin composition as a whole be 5000×10⁻¹³ cm³·cm/cm²·sec·Pa or less, and that the water vapor permeable coefficient be 500×10⁻¹³ cm³·cm/cm²·sec·Pa or less in order to maintain a dew point performance.

The resin composition used in the insulating glass unit 10 according to the first embodiment of the present invention includes a butyl-type rubber, a crystalline polyolefin, a desiccant, and an inorganic filler, wherein the percentage of the butyl-type rubber with respect to the total amount of the butyl-type rubber and the crystalline polyolefin is 10 to 100% by mass, and the percentage of the crystalline polyolefin with respect to the total amount of the butyl-type rubber and the crystalline polyolefin is 0 to 10% by mass, wherein the ratio of the inorganic filler to the total of 100 parts by mass of the butyl-type rubber and the crystalline polyolefin is 200 parts by mass or less.

The resin composition used in the insulating glass unit 10 according to the first embodiment of the present invention includes a butyl-type rubber, a crystalline polyolefin, a desiccant, and an inorganic filler, wherein the percentage of the butyl-type rubber with respect to the total amount of the butyl-type rubber and the crystalline polyolefin is 10 to 100% by mass, and the percentage of the crystalline polyolefin with respect to the total amount of the butyl-type rubber and the crystalline polyolefin is 0 to 10% by mass, wherein the ratio of the inorganic filler to the total of 100 parts by mass of the butyl-type rubber and the crystalline polyolefin is 200 parts by mass or less.

The above-described butyl-type rubber refers to isobutylene homopolymers and copolymers thereof with other monomers, and their modifications. As a copolymer, a copolymer obtained by copolymerizing with a relatively small amount of isoprene (usually called butyl rubber) is preferable. Modifiers include halogenated butyl rubber and partially cross-linked butyl rubber. Particularly preferred butyl-type rubber is a copolymer of isobutylene and isoprene, commonly referred to as butyl rubber, and partially cross-linked butyl rubber.

Loss tangent is measured according to JIS K 6394:2007. The loss tangent is a value of measuring a sample having a diameter of 25 mm and a thickness of 0.6 mm in a shear mode, at a frequency of 1 Hz, and at a deformation amount of 5%.

The thermoplastic resin composition used for the insulating glass unit 10 according to the first embodiment of the present invention preferably has a loss tangent of 0.65 or less defined by JIS K 6394:2007 at 50 °C. The 50 °C is a temperature that assumes an environment in which the insulating glass unit 10 is used. If the loss tangent at 50 °C is 0.65 or less, the fluidity of the thermoplastic resin composition is low, which is preferable for retaining the shape as the insulating glass unit, such as sheet misalignment. The loss tangent at 50 °C is more preferably 0.60 or less, and even more preferably 0.55 or less. The lower limit of the loss tangent at 50 °C is not particularly limited, but is preferably 0.40 or more to maintain the shape, more preferably 0.45, and is more and more preferably 0.50.

The thermoplastic resin composition used for the insulating glass unit 10 according to the first embodiment of the present invention preferably has a loss tangent of 1.05 or more. The loss tangent is defined by JIS K 6394:2007 at 150 °C. The 150 °C is a temperature that assumes the environment in which the thermoplastic resin is molded. If the loss tangent at 150 °C is 1.05 or more, the molding fluidity is high, and molding is easy. More preferably, the loss tangent at 150 °C is 1.08 or more, and even more preferably 1.10 or more. The upper limit of the loss tangent at 150 °C is not particularly limited, but is preferably 3.00 or less, more preferably 2.50 or more, and more and more preferably 2.00 or more in order to maintain the shape during molding.

The ratio A/B of the loss tangent A defined by JIS K 6394:2007 at 150 °C to the loss tangent B defined by JIS K 6394:2007 at 50 °C is preferably 1.9 or more for the thermoplastic resin composition used for the insulating glass unit 10 according to the first embodiment of the present invention. The 150 °C is a temperature that assumes the environment in which the thermoplastic resin composition is molded. If the A/B is 1.9 or more, the fluidity is high during molding, which is preferable. The A/B of 2.0 or more is more preferred, and the A/B of 2.1 or more is even more preferred. The upper limit of A/B is not particularly limited, but is preferably 2.5 or less, more preferably 2.3 or less, and even more preferably 2.2 or less, in order to ensure fluidity during molding.

The resin composition used for the insulating glass unit 10 according to the first embodiment of the present invention preferably has a melt viscosity of 0.6 or more kPa·s and 7.0 kPa·s or less at 120 °C.

In FIG. 1, the insulating glass unit 10 includes a spacer 20 between two opposing glass sheets 1a and 1b, and the spacer 20 is formed by a melt molding method such as an extrusion molding method or an injection molding method. In performing such extrusion molding or injection molding operation, the molten thermoplastic composition is extruded or injected from an extruder, an applicator, or an injection molding machine. Here, when the melt viscosity of the thermoplastic resin composition that is a spacer material is high, the spacer material cannot be melted and molded, and extrusion of the spacer material from the molding machine is likely to be difficult unless the temperature is increased to 180 °C or more. Molding at such a high temperature, such as over 180 °C, results in butyl type rubber approaching the pyrolysis temperature. Therefore, when the butyl type rubber is held in a high temperature state for a long time due to a problem during molding and the like, the butyl type rubber may decompose, which is liable to cause physical strength degradation or gas barrier property degradation.

In contrast, when the temperature is 150 °C or less, because the temperature does not reach the decomposition temperature of the butyl type rubber, there is little concern about the decomposition; the physical strength of the butyl type rubber after molding is maintained; and the gas barrier property is unlikely to decrease. When the melt viscosity of the thermoplastic resin composition used as a spacer material at 120 °C is within the range of 0.6 kPa·s to 7.0 kPa·s, the thermoplastic resin composition is likely to mold even at a temperature of 150 °C or less. As a result, the discharge amount of the spacer material is increased, high-speed molding becomes possible, and the manufacturing tact is shortened. Cost reduction is also possible from the viewpoint of energy reduction during the manufacture. Further, because the spacer material can be molded without being heated to high temperature, degradation during molding of the spacer material itself can be reduced and long-term reliability can be improved. Incidentally, the temperature of the thermoplastic resin composition may be set to any degree C, as long as the temperature is 170 °C or less, but may be set, for example, to a predetermined temperature in the range of 110 to 160 °C. Specifically, the temperature may be set, for example, to a temperature from 120 to 150 °C.

The lower the melt viscosity becomes, the less workload the molding machine has, but if the melt viscosity is too low, it is difficult to form a certain shape due to the low viscosity. Therefore, from the viewpoint that the spacer material has moldable viscosity and the workload of the molding machine is small, the melt viscosity is set in the above-described range of 0.6 kPa·s to 7.0 kPa·s. The melt viscosity is preferably 1.0 kPa·s or more and 5.0 kPa·s or less, and more preferably 1.0 kPa·s or more and 4.5 kPa·s or less.

The melt viscosity is the viscosity at 120 °C and at a shear rate of 100/s measured according to the method defined in JIS K 7199 (1999) using a capillary having a capillary length of 10 mm and a capillary diameter of 2 mm, and a capillary rheometer having a furnace with a furnace body diameter of 9.55 mm.

The resin composition used for the insulating glass unit 10 according to the first embodiment of the present invention preferably has a storage elastic modulus E' of 15 MPa or more and 60 MPa or less at 25 °C.

The insulating glass unit 10 is actually used only after the molded spacer 20 has been cooled, solidified and completed as the insulating glass unit 10, and the temperature to be used is typically around 25 °C of room temperature. In this case, when the elastic modulus of the spacer 20 is too low at room temperature, the sheet misalignment is likely to occur, and a shape retention problem is likely to occur. Further, when the elastic modulus of the spacer 20 at room temperature is too high, because stress relaxation by deformation of the sealing material in response to the deformation of the air space layer 30 caused by a change in temperature does not occur, the glass sheets 1a and 1b are likely to break. Accordingly, the spacer 20 preferably has a suitable modulus of elasticity at room temperature. When the storage elastic modulus E' at 25 °C is 15 MPa or more and 60 MPa or less, it is possible to form a spacer 20 that is unlikely to cause misalignment of the glass sheets 1a and 1b and that is resistant to damage by itself. The storage elastic modulus E' at 25 °C is preferably 10 MPa or more and 45 MPa or less, more preferably 13 MPa or more and 40 MPa or less, more preferably 15 MPa or more and 30 MPa or less, and particularly preferably 20 MPa or more and 25 MPa or less.

Here, the storage elastic modulus E' is a component of energy stored inside an object among energy generated by external force to the object and deformation of the object, and represents elasticity (spring) rather than viscosity. Therefore, as the storage modulus E' increases, the elasticity increases. The storage elastic modulus E' is a value of the storage elastic modulus at a temperature of 25 °C obtained from the results of a tensile test performed so that a sample having a grabbing interval of 20 mm, a width of 5 mm and a thickness of 0.5 mm is raised to 5 °C/min in the constant-speed warming mode and becomes to have a deformation of 0.1%, a static/dynamic ratio of 2 and a frequency of 1 Hz. By using a thermoplastic resin composition having a storage elastic modulus E' of 15 MPa or more and 60 MPa or less at 25 °C as the spacer material, the elasticity of the spacer 20 at room temperature can be appropriately maintained, and thus it is possible to form the insulating glass unit 10 including the glass sheets 1a and 1b unlikely to break and unlikely to be out of alignment.

As described above, as a method of setting the melt viscosity at 120 °C to 0.6 kPa·s or more and 7.0 kPa or less, and setting the storage elastic modulus E' at 25 °C to 15 MPa or more and 60 MPa or less, there is a method of adjusting the molecular weight of the butyl-type rubber. This point is explained below.

The thermoplastic resin composition used as a material for the spacer 20 of the insulating glass 10 according to the present embodiment contains a butyl-type rubber. The butyl-type rubber contained in the thermoplastic resin composition contains two types of materials: a high molecular weight side material forming a high molecular weight butyl-type rubber and a low molecular weight side material forming a low molecular weight butyl-type rubber.

Here, although the chemical structure of the high molecular weight butyl-type rubber and the low molecular weight butyl-type rubber is almost the same, their molecular weights are different. Because the chemical structure is the same, gas permeability, chemical resistance and the like are the same, but physical properties such as melt viscosity and elastic modulus are different due to the different molecular weights. The high molecular weight butyl-type rubber is a block-shaped solid that exhibits elastomeric properties. On the other hand, the low molecular weight butyl-type rubber exhibits viscous liquid and adhesive properties.

In the insulating glass unit 10 according to the present embodiment, in order to increase the fluidity (decrease the melt viscosity) at high temperatures while maintaining the elastic modulus at room temperature, the difference in physical properties due to the molecular weight of the butyl-type rubber is used. Hereinafter, the details will be described.

In order to reduce the melt viscosity, because the molecular weight of the high molecular weight butyl-type rubber has a significant influence, it is preferable to use a material having a lower molecular weight in a range indicating the physical properties (high elastomericity and elasticity) of the high molecular weight butyl-type rubber in selecting the high molecular weight butyl-type rubber. Specifically, as the high molecular weight butyl-type rubber, a material is used having a number average molecular weight of 55,000 or more and 150,000 or less, and it is preferable to use a material having a number average molecular weight of 60,000 or more and 120,000 or less. Further, it is more preferable to use a material having a number average molecular weight of 65,000 or more and 100,000 or less, and it is particularly preferable to use a material having a number average molecular weight of 70,000 or more and 80,000 or less.

The percentage of the high molecular weight butyl-type rubber with respect to the total weight is preferably 15 to 35% by mass, more preferably 16 to 30% by mass, and even more preferably 17 to 25% by mass. When the percentage is more than 15% by mass, it can increase the elasticity modulus at room temperature. If it is 35% by mass or less, the melt viscosity at high temperature can be reduced.

When a butyl type rubber at a lower molecular weight side is selected from among high molecular weight butyl type rubbers as the high molecular weight butyl type rubber, a decrease in the elastic modulus may occur at room temperature, and problems may occur in the shape retention property as the insulating glass unit, such as sheet misalignment. Therefore, in order to reduce the melt viscosity and to maintain the elastic modulus at room temperature, in the selection of the low molecular weight butyl type rubber, a material at a higher molecular weight side is preferably selected within a range in which the physical properties (i.e., high viscosity) of the low molecular weight butyl type rubber are exhibited. Specifically, as the low molecular weight butyl type rubber, a material is used having a number average molecular weight of 35000 or more and 50000 or less, and it is preferable to use a material having a number average molecular weight of 38000 or more and 45000 or less. The percentage of the low molecular weight butyl-type rubber with respect to the total weight is preferably 15 to 35% by mass, more preferably 16 to 30% by mass, and even more preferably 17 to 25% by mass. If it is 15% by mass or more, the melt viscosity can be reduced at high temperatures. If it is not more than 35% by mass, the modulus of elasticity at room temperature can be increased.

By selecting the materials of butyl type rubbers as described above, it is possible to manufacture and configure the high-quality insulating glass 10 including the spacer 12 capable of increasing the productivity while maintaining the elastic modulus at room temperature and reducing the melt viscosity at a high temperature.

Next, materials other than butyl-type rubber will be described.

A crystalline polyolefin is referred to as a homopolymer of olefin such as ethylene, propylene and copolymers thereof with another monomer, and a modified form thereof, which has crystalline properties. Preferably, the polymer structure is a syndiotactic structure or an isotactic structure, although other structures may be included. Ethylene and propylene are particularly preferable as olefins.

The copolymer includes a copolymer of two or more types of olefins, or a copolymer of an olefin with another monomer. The copolymer of ethylene or propylene with another monomer that does not inhibit crystallinity is suitable. As the copolymer, a block copolymer is more appropriate than an alternating copolymer and a random copolymer. A modifier includes a crystalline polyolefin to which a functional group such as an anhydride, carboxyl, and epoxy group is introduced.

The crystalline polyolefin is polyethylene and polypropylene, which are substantially homopolymers. For example, low-density polyethylene, medium-density polyethylene, high-density polyethylene, and the like can be used as the polyethylene. The crystallinity of the crystalline polyolefin is preferably 30% or more, and particularly preferably 50% or more. For example, typical crystallinity values for conventional crystalline polyolefins are 50 to 60% for low density polyethylene, 75 to 90% for high density polyethylene, and 55 to 65% for polypropylene. Although the molecular weight is not particularly limited, a number average molecular weight of about 200,000 to 800,000 for polyethylene and about 100,000 to 400,000 for polypropylene is suitable.

As described above, because polyethylene and polypropylene have high crystallinity, polyethylene and polypropylene have moisture permeability lower than those of butyl-type rubbers. Among them, those that exhibit a significantly low melt viscosity have a lower melt viscosity of the composition and improve moldability of the composition more than those of the butyl-type rubber alone. Accordingly, adding various inorganic fillers becomes possible to achieve higher hardness resin compositions for spacers, and is particularly preferable from an economic standpoint.

The percentage of crystalline polyolefin with respect to the total amount of the butyl-type rubber and the crystalline polyolefin in the resin composition described above is 1 to 10% by mass. When the percentage of the crystalline polyolefin is 10% by mass or less, the dispersion degree is likely to be great. When the percentage of the crystalline polyolefin is too excessive, phase separation is significantly expressed, and sometimes the surface of the resin composition becomes rough. The percentage of the crystalline polyolefin with respect to the sum of the butyl rubber and the crystalline polyolefin is preferably 9% by mass or less, more preferably 8% by mass or less, further more preferably 7% or less, and particularly preferably 6% or less. Moreover, the lower limit of the percentage of the crystalline polyolefin with respect to the total amount of the butyl-type rubber and the crystalline polyolefin is 1% by mass or more, preferably 3% by mass or more, and more preferably 4% or more.

When inorganic fillers are added, the percentage of crystalline polyolefin with respect to the total amount of butyl-type rubber and crystalline polyolefin is reduced. For example, when more than 50 parts by mass of an inorganic filler is added to a total of 100 parts by mass of a butyl-type rubber and crystalline polyolefin, the percentage of the crystalline polyolefin with respect to the total amount of the butyl-type rubber and the crystalline polyolefin is 2 to 20% by mass, which is sufficient to exert an effect for the purpose.

Thus, a substantially effective amount of inorganic filler can be added to the resin composition comprising a butyl-type rubber and a crystalline polyolefin. The substantially effective amount means one or more parts by mass with respect to a total of 100 parts by mass of the butyl-type rubber and the crystalline polyolefin. The upper limit of the amount of the inorganic filler is 200 parts by mass, preferably 150 parts by mass, more preferably 130 parts by mass, particularly preferably 100 parts by mass, and more preferably 90 parts by mass, because incorporating too much the inorganic filler increases the melt viscosity of the composition and decreases the tensile strength and tear strength. The preferred lower limit of the formulating amount in the case of an inorganic filler formulation is 10 parts by mass, more preferably 20 parts by mass, more preferably 25 parts by mass, particularly preferably 50 parts by mass, more preferably 70 parts by mass, and even more preferably 80 parts by mass.

As the inorganic filler, calcium carbonate, talc, mica, carbon black and the like, which are normally used as an inorganic filler, can be used alone or in combination with two or more kinds.

Before such a resin composition is used at least for final use, it is highly effective that the butyl-type rubber and the crystalline polyolefin contained therein be mixed at a high temperature. The high temperature in this mixture means a temperature greater than or equal to the crystalline melting point of the crystalline polyolefin. The temperature of this mixture needs to be less than or equal to the decomposition point of the butyl-type rubber, and the temperature does not preferably exceed about 300 °C, which is the decomposition point of the ordinary butyl-type rubber. Especially, the temperature is preferably 200 °C or less from the viewpoint of productivity. Thus, preferably, the crystalline polyolefin also has a crystalline melting point of 200 °C or less.

More preferably, the resin material for the spacer changes hardness as little as possible in the operating temperature range. In order to meet these requirements, a crystalline polyolefin having a crystalline melting point above the normal upper limit of use is preferred. The normal upper operating temperature limit of resin materials for building materials is about 80 °C.

Because the crystalline polyolefin is constrained by the cohesive force of the crystalline phase, even in the temperature range above the glass transition temperature, the sudden drop in hardness and a fluidized state seen in the amorphous resin do not occur below the crystalline melting point. Conversely, a significant decrease in melt viscosity is observed at the crystalline melting point, and an effect is expected of improving the kneading performance with the butyl-type rubber.

Such a resin composition may contain a tackifier, a desiccant and an additive such as carbon black, talc and the like, which may generally be incorporated into the resin material for spacers. Particularly, when the resin composition is used as a spacer, it is preferable to combine a desiccant, such as zeolite, silica gel, or alumina, a tackifier, a plasticizer, a silane coupling agent, and various stabilizers.

In particular, it is preferable to incorporate a desiccant, such as zeolite, into the resin composition from 5 to 30% by mass. It is also preferable to add 200 parts by mass or less of polyisobutylene, particularly 5 to 150 parts by mass of polyisobutylene to 100 parts by mass of butyl-type rubber other than polyisobutylene in order to provide the adhesion effect and the plasticizing effect.

Alternatively, a tackifier may be added. The viscoelastic temperature characteristics can be controlled by containing the tackifier. As a tackifier, a compound generally known in the art can be used, but from the viewpoint of weather resistance, a compound having a structure that absorbs less ultraviolet light is preferable. Especially, a tackifier of the hydrogenated dicyclopentadiene system is preferable in terms of weather resistance.

In addition, the additive may be formulated with 0 to 5% by mass. The additive herein means, for example, a lubricant, a pigment, an antistatic agent, a tackifier, a plasticizer, an antiaging agent, a heat stabilizer, an antioxidant, a hydrolyzable silyl group-containing compound such as a silane coupling agent, a blowing agent, a filler containing an inorganic filler and the like, and the term "additive" used elsewhere means an additive to which a tackifier is added after removing the inorganic filler from the additive.

Taken together, the particularly preferred resin percentage for spacers is 30 to 55% by mass of butyl-type rubber, 3 to 7% by mass of a crystalline polyolefin, 15 to 40% by mass of an inorganic filler, and 20 to 40% by mass of a desiccant and an additive (in this case, of course, the percentage of butyl rubber with respect to the total of the butyl rubber and the crystalline polyolefin is 50 to 100% by mass, and the percentage of the crystalline polyolefin is 1 to 10% by mass).

With the resin composition for the spacer according to the present invention, a spacer having the claimed JIS A hardness and a preferable water vapor transmission coefficient is obtained in the present invention.

The glass sheet used in forming the insulating glass according to the present invention is not limited to particular glass, and includes a window commonly used in a building material and a vehicle, a glass sheet such as a door, tempered glass, laminated glass, glass with a metal net, heat absorbing glass, and further a glass sheet having a thin coating of metal or another inorganic substance on the surface such as heat reflecting glass and low reflection glass, an acrylic resin sheet called organic glass, a polycarbonate sheet and the like.

In addition, the insulating glass unit may be composed of two glass sheets or three or more glass sheets.

### [Second Embodiment]

FIG. 2 is a diagram showing an example of insulating glass 11 according to a second embodiment of the present invention. The insulating glass unit 11 according to the second embodiment differs from the insulating glass unit 10 according to the first embodiment in that an adhesive layer 40 is provided between glass sheets 1a and 1b and a spacer 20. Thus, the insulating glass unit 11 according to the second embodiment of the present invention is formed by applying an adhesive dissolved in a solvent to the glass surface on which the spacer 20 abuts. The adhesive layer 40 is preferably provided for long-term reliability. Because the components other than the adhesive layer 40 are the same as the insulating glass unit 10 according to the first embodiment, the same reference numerals are given to the corresponding components and the description thereof is omitted.

As shown in FIG. 2, the adhesive layer 40 may be provided in a region S2 that is wider than a region S1 to which the spacer 20 is provided. This ensures adhesion between the spacer 20 and the glass sheets 1a and 1b. Further, in FIG. 2, for ease of understanding, the adhesive layer 40 is depicted as a thick layer. However, for example, the thickness t of the adhesive layer 40 is 50 µm or less, compared to the spacer having thickness levels of 6 mm and 12 mm, and specifically may be 20 µm to 40 µm. The thickness level of the adhesive layer 40 may be in a range of 1 µm to 20 µm, for example, about 5 µm, if the adhesive layer 40 is configured to be as thin as possible to the extent that adhesion can be secured. When the thickness t of the adhesive layer 40 is formed thinly, the thickness of 2 µm to 10 µm is preferable, and the thickness of 3 to 7 µm is more preferable.

Because the thermoplastic resin composition constituting the spacer material is hydrophobic and the glass sheets 1a and 1b are hydrophilic, the adhesiveness of both is required to be secured. However, as long as the adhesiveness of both is secured, various adhesives can be used. For example, a urethane-based adhesive made from a derivative of soft polyolefin-based polyol, a non-yellowing isocyanate and a non-yellowing isocyanate may be used for weather resistance and adhesion. The urethane-based adhesive may contain at least a polyol and an isocyanate, and may also contain a silane coupling agent, if desired, to ensure adhesion with the glass sheet. In addition to the soft polyolefin-based polyol described above, the polyol may be a polyester polyol or a polyacrylic polyol and may be a urethane resin obtained by causing the polyol to react with the non-yellowing isocyanate. The isocyanate may be a yellowish-free isocyanate or a derivative of a yellowish-free isocyanate. Thus, the urethane-based adhesive contains at least one of urethane-based resins obtained by causing a polyester polyol, a polyacrylic polyol, a polyolefinic polyol and polyol to react with the non-yellowing isocyanate, and at least one of the non-yellowing isocyanate and a derivative of the non-yellowing isocyanate, and may optionally further contain a silane coupling agent and the like as necessary. The polyol means a multifunctional alcohol having one or more hydroxyl groups per molecule.

Here, the polyol contained in the urethane-based adhesive preferably has a glass transition point Tg greater than 20 °C. Accordingly, the initial strength at the time of adhesion can be secured, and it is possible to prevent or reduce occurrence of sheet misalignment when the hightemperature butyl-type rubber and the glass sheet are bonded together. Preferably, the molecular weight of the polyol is in a range of 2000 to 50,000. This ensures long-term reliability such as heat resistance and weather resistance. In addition, the acid value of the polyol is preferably less than 3 KOH mg/g. This ensures the stability and workability of the adhesive solution. The acid value is a number of mg of potassium hydroxide required to neutralize the free fatty acids present in 1 g of polyol, indicating the degree of purification of the polyol, and the degree of purification increases as the free fatty acids decrease.

Here, the adhesive for bonding the glass sheets 1a and 1b to the resin composition containing the butyl-type rubber used as the material of the spacer 20 may be an adhesive composed of (A) a mixture of a terminal reactive oligomer having repeating units of a divalent hydrocarbon group of 4 carbon atoms and a compound capable of reacting with the terminal functional group of the oligomer, and (B) a reaction product of a terminal reactive oligomer having repeating units of a divalent hydrocarbon group of 4 carbon atoms and a compound capable of reacting with the terminal functional group of the oligomer.

For example, the terminal reactive oligomer having a divalent hydrocarbon group having 4 carbon atoms as the repeating unit is a compound containing a repeating unit derived from a hydrocarbon-type monomer having 4 carbon atoms and having a reactive functional group at the oligomer terminus such as a hydroxyl group, a carboxyl group, an amino group, a mercapto group, an epoxy group, an isocyanate group and the like. This is a compound that can become a high molecular weight polymer that functions as an adhesive by causing its functional group to react with a compound having a functional group that can react with the functional group, thereby extending a chain or forming a bridge.

The lower limit of the molecular weight of the terminal reactive oligomer is not particularly limited, but is normally about 2000. The upper limit is not particularly limited, but is about 10,000. A molecular weight of 500,000 to 10,000 is preferred, and a molecular weight of 1000 to 5000 is particularly preferred. The terminal reactive oligomer is also preferably a substantially linear oligomer. The relatively low molecular weight oligomer may also be branched oligomer, or three or more functional oligomers having a branch with a reactive functional group at each end.

The end-reactive oligomer preferred in the insulating glass 11 according to the second embodiment of the invention is a monopolymer of 1-butene, a homopolymer of isoprene, a copolymer of 1-butene and isoprene, a hydride of a monopolymer of butadiene (1,2-polybutadiene or 1,4-polybutadiene), a monomer having 4 carbon atoms or more, such as 1-butene, isoprene, and butadiene, a copolymer of pentadiene, styrene, and the like, and its hydride. The most preferred terminal reactive oligomers are a hydride of a homopolymer of butadiene and a homopolymer of isoprene.

The functional group in the terminal reactive oligomer includes hydroxyl, carboxyl, amino, mercapto, epoxy, and isocyanate groups. Hydroxyl or carboxyl groups are preferred, and hydroxyl groups are particularly preferred.

A compound having two or more functional groups capable of reacting with the terminal functional group of the aforementioned oligomer is used as the compound having the functional group capable of reacting with the functional group of the aforementioned terminal reactive oligomer.

For example, the hydroxyl terminal oligomer can react with a chain extending agent made from a polyisocyanate to form polyurethane, and the hydroxyl terminal oligomer can react with a polycarboxylic acid or its acid chloride, an alkyl ester, or the like to form polyester. Similarly, a carboxyl-terminal oligomer can react with polyols, polyamines, polyepoxides and the like, and an aminoterminal oligomer can react with polyepoxides, polycarboxylic acids or anhydrides thereof and the like. A particularly preferred combination of a terminal reactive oligomer and a compound capable of reacting with a terminal functional group of the oligomer in the insulating glass 11 according to a second embodiment of the present invention is a combination of a hydroxyl terminal oligomer and a compound made from a polyisocyanate or a polycarboxylic acid or a reactive acid derivative thereof.

Also, the above-described adhesive may be supplemented with a silane coupling agent as necessary. As noted above, the silane coupling agent is used to enhance adhesion to glass.

Examples of the silane coupling agent include an epoxysilane such as 3-glycidoxypropyltrimethoxysilane, 3-glycidoxypropyltriethoxysilane, aminosilane such as 3-aminopropyltrimethoxysilane, 3-aminopropylethoxysilane, 3-triethoxysilyl-N-(1,3-dimethylbutyridene)propylamine, and the like.

In addition, an additive such as an antioxidant, a wetting agent, a defoamer and the like and an organic solvent may be added to the adhesive as necessary.

### [third embodiment]

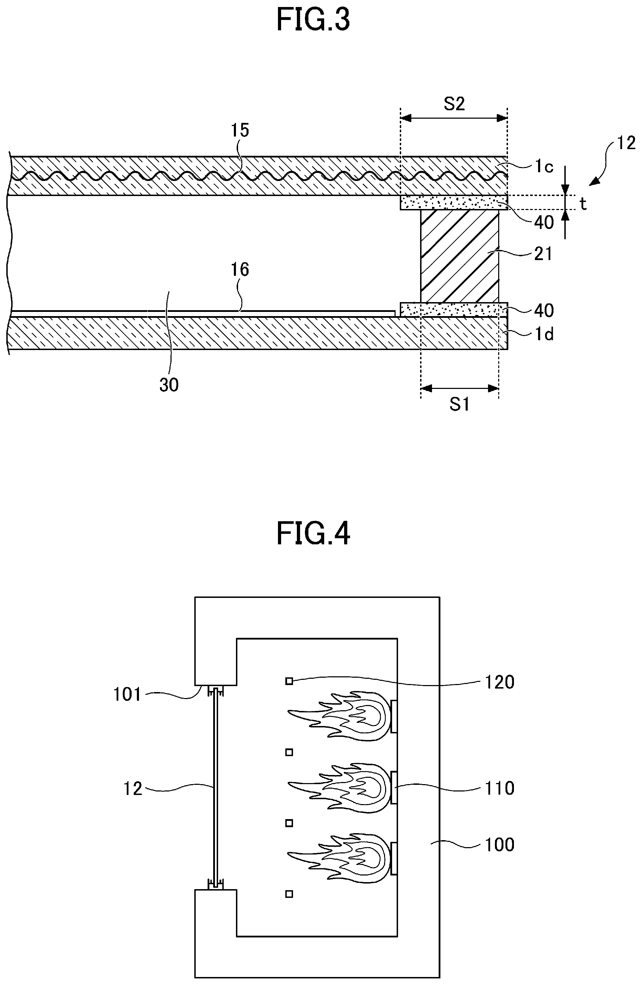

FIG. 3 is a diagram showing an example of an insulating glass unit 12 according to a third embodiment of the present invention. The insulating glass unit 11 according to the third embodiment differs from the insulating glass unit 11 according to the second embodiment in that a wired glass 1c and a Low-E glass 1d are used as glass sheets. Thus, the insulating glass unit 12 according to the third embodiment of the present invention is configured to include a combination of the wired glass 1c and the Low-E glass 1d. The insulating glass unit 12 according to the third embodiment is formed as a fire-resistant insulating glass unit 12 having improved fire resistance. The wired glass 1c is a glass sheet including a wire mesh 15 therein, and the Low-E glass 1d is a glass sheet including a surface coated with a low-radioactivity Low-E metal film 16 on the side of the air space layer 30. For example, the thickness of the wired glass 1c may be 3 mm or more and 11 mm or less, 6.8 mm, or 10 mm. The thickness of Low-E glass 1d may be, for example, 2.5 mm or more and 19 mm or less, 3 mm or more and 10 mm or less, or 5.0 mm. However, the thicknesses of the wired glass 1c and the Low-E glass 1d may have various thicknesses depending on the intended use of the insulating glass unit 12.

A spacer 21 used for the insulating glass unit 12 according to the third embodiment is a spacer having improved fire resistance. The spacer 20 described in the first and second embodiments is the highly improved fire-resistant spacer 20, and thus the particularly improved fire-resistant spacer 21 can be formed by specifying the type and content of the components shown in the first and second embodiments in more detail.

A fire resistance test will be described before describing the specific configuration of the spacer 21. A fire blocking performance test in accordance with ISO 834-1:1999 is adopted as the fire resistance test. Passing this test is an indicator of the fire resistance properties of an insulating glass unit.

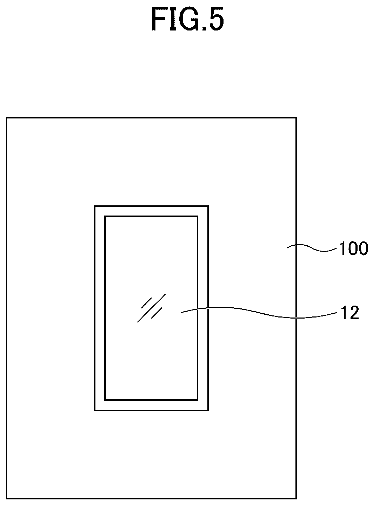

FIG. 4 is a diagram showing a method of the fire blocking performance test in accordance with ISO 834-1:1999. As shown in FIG. 4, a burner 110 and a thermometer 120 are provided in a furnace 100, and an insulating glass unit 12 to be tested is fixed to an opening 101 of the furnace 100. FIG. 5 is a front view of the furnace 100 shown in FIG. 4. In the fire blocking performance, the insulating glass unit 12 is heated for 20 minutes according to the heating curve based on ISO 834 (T = 345 log10 (8t + 1) + 20, T: furnace inside temperature (°C), t: time (minutes)) as shown in FIG. 4 and FIG. 5.

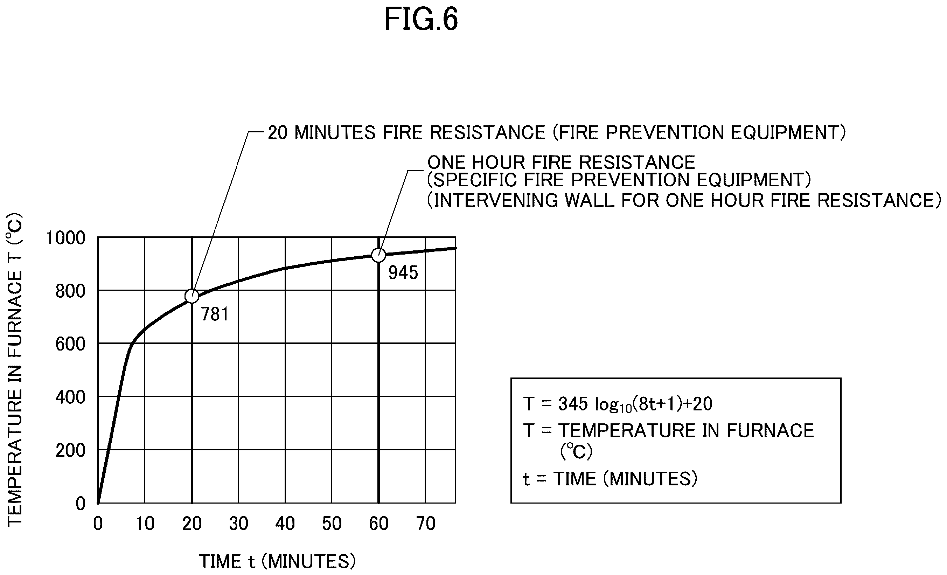

FIG. 6 is a diagram showing the heating curve in accordance with ISO 834-1:1999. The inside of the furnace 100 is heated with the burner 110 and a fire resistance test is performed on the insulating glass unit 12 so that the temperature in the furnace measured by the thermometer 120 becomes a temperature gradient as shown in FIG. 6.

The insulating glass unit 12 passes the fire resistance test when the insulating glass unit 12 withstands the fire for 20 minutes with no flame penetration and no flame ejection for 10 seconds. More accurately, satisfying the following conditions is acceptable: no flame ejection to the non-heated side for longer than 10 seconds, no smoke to the non-heated side for longer than 10 seconds, and no damage and no gap such as a breakage through which the flame passes. For example, when two sheets of glass 1c and 1d of the insulating glass unit 12 collapse, the flame penetrates through the insulating glass unit 12, and when the spacer 21 burns and creates a breakage or a gap through which the flame passes, the flame ejection occurs from the four sides of the insulating glass unit 12. Accordingly, the fire resistance of the spacer 21 is the key to pass the fire resistance test. The fire resistance tests are conducted on both the front and back sides of the insulating glass unit 12.

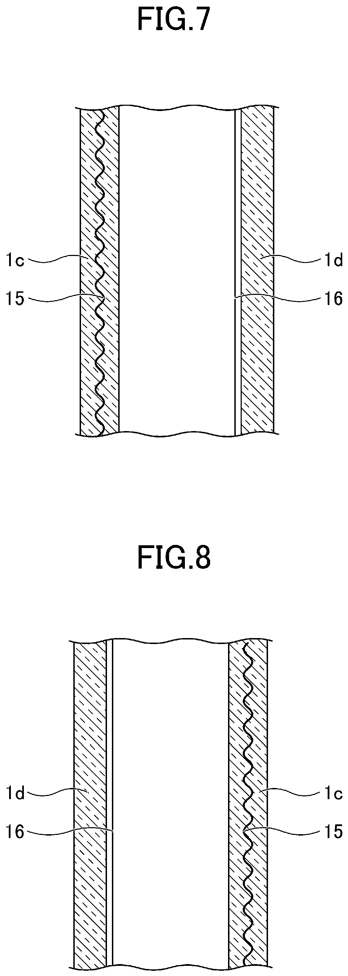

FIG. 7 is a diagram showing a case where the insulating glass unit 12 is disposed so that a Low-E glass sheet 1d of the insulating glass unit 12 is disposed on the heating side and a wired glass sheet 1c of the insulating glass unit 12 is disposed on the non-heated side. In this case, because the wired glass 1c having a strong fire resistance is disposed on the non-heated side, even if the Low-E glass 1d collapses, the wired glass 1c on the non-heated side frequently endures and causes the insulating glass unit 12 to pass the tests.

FIG. 8 is a diagram showing a case where the insulating glass unit 12 is disposed so that the Low-E glass sheet 1d of the insulating glass unit 12 is disposed on a non-heated side and the wired glass sheet 1c of the insulating glass unit 12 is disposed on the heated side. In this case, because the Low-E metal film 16 of the Low-E glass sheet 1d reflects heat inward the furnace 100, the wired glass sheet 1c is heated at a faster rate than in the case of FIG. 7. If the inside of the spacer 21 burns and the wired glass sheet 1c collapses, because the Low-E glass sheet 1d is not as fire-resistant as the wired glass sheet 1c, the flame frequently penetrates the insulating glass unit 12. That is, the arrangement pattern shown in FIG. 8 is prone to rejection due to the configuration. Passing the fire resistance test in the arrangement of FIG. 8 requires that the heat resistance of the spacer 21 be increased and that the collapse of the wired glass sheet 1c be prevented as much as possible.

In order to increase the fire resistance property of the spacer 21, it is necessary to use a highly fire-resistant material as the material forming the spacer 21. Examples of the highly fire-resistant materials include materials unlikely to be burned, and also include materials having many pores and capable of absorbing methane and carbon monoxide that are combustible gases, and of inhibiting the combustion of the spacer 21. Although the spacer 21 is initially used in a dry state, the use of the insulating glass unit 12 gradually causes the pores to include moisture therein. In the fire resistance test, heating serves to releases the moisture in the pores therefrom and serves as a coolant.

In the insulating glass unit 12 in accordance with this embodiment, as a material of the spacer 21, a material having many such pores is used to improve the fire resistance of the spacer 21. The pore size is preferably 0.25 nm or more. In addition, the pore size is preferably 100 nm or less, more preferably 10 nm or less, and more and more preferably 1.0 nm or less.

As a specific material, the first and second embodiments have described that a desiccant such as zeolite, silica gel, or alumina may be added to the resin composition as the material forming the spacer 20. However, in the third embodiment, a spacer 21 having a desiccant combined with the resin composition is used. As the desiccant, any of zeolite, silica gel, or alumina may be used, and preferably zeolite is used. As the desiccant, a powdered material may be used, and a powder having a particle size in a range that does not reach the fine particles may be used. For example, preferably, the particle size of the desiccant is 800 µm or less for the median diameter d50, further preferably 600 µm or less, and even more preferably 400 µm or less. For example, the particle size of the desiccant is preferably 2 µm or more and 20 µm or less of the median diameter d50, more preferably 2 µm or more and 10 µm or less, and even more preferably 3 µm or more and 8 µm or less. For example, a zeolite of 4 to 6 µm with a median diameter d50 may be used as a desiccant.

In the first and second embodiments, carbon black may be added to the resin composition forming the spacer 20 as an inorganic filler. Preferably, the spacer 21 of the insulating glass unit 12 according to the third embodiment contains carbon black. Carbon black has a very large nitrogen specific surface area and is considered to have a large trapping effect on the particles of combustion gases such as methane and carbon monoxide.

Among carbon blacks, hard carbon type carbon black is preferred for fire protection use because of its relatively large surface area. The nitrogen specific surface area of the carbon black is preferably 50 m²/g or more and 200 m²/g or less, more preferably 55 m²/g or more and 150 m²/g or less, and even more preferably 60 m²/g or more and 120 m²/g or less. The hard carbon-type carbon black is more preferably HAF-type.

Talc may be included in the resin composition of the spacer 20 as an inorganic filler in the first and second embodiments, and the spacer 21 of the insulating glass unit 12 according to the third embodiment also preferably contains talc. Talc is also an incombustible particulate material. For example, the particle diameter of talc is preferably 3 µm or more and 10 µm or less at the median diameter d50, more preferably 4 µm or more and 8 µm or less, and even more preferably 4 µm or more and 6 µm or less.

When the spacer 21 is heated to 800 °C under an air atmosphere, the residual mass is preferably 30% or more and 80% or less, further preferably 35% or more and 60% or less, and even more preferably 35% or more and 50% or less.

In addition, preferably, the outer end surface of the spacer 21 is disposed so as to be positioned inward for 1 mm or more from the end surface of the wired glass sheet 1c and the Low-E glass sheet 1d. The distance of the outer end face of the spacer 21 from the end face of the wired glass sheet 1c and the Low-E glass sheet 1d is preferably 3 mm or more, more preferably 5 mm or more, and more and more preferably 6 mm or more. For example, the distance of the outer end face of the spacer 21 from the end face of the wired glass sheet 1c and the Low-E glass sheet 1d may be set to a predetermined distance ranging from 3 to 8 mm. This is also true for the insulating glass units 10 and 11 according to the first and second embodiments.

The same adhesive may be used as the adhesive described in the second embodiment. For example, a urethane-based adhesive made of a polyolefin-based polyol, a non-yellowing isocyanate, and a derivative of a non-yellowing isocyanate may be used. Because these adhesives are cross-linked adhesives that do not melt, the adhesives have properties that do not melt even when heated and that remain in the place, thereby improving the fire resistance performance of the insulating glass unit 12.

In the third embodiment, the insulating glass unit 12 having the same configuration as the second embodiment including the adhesive layer 40 has been described. However, in the same manner as in the first embodiment, the insulating glass unit 12 may be formed without the adhesive layer. However, because providing the adhesive layer 40 makes it easier to pass the fire resistance test, the adhesive layer 40 is preferably provided.

In addition, the additives described in the third embodiment are preferably added to the thermoplastic resin composition as many types as possible, and preferably all kinds of the additives are added.

According to a third embodiment, by adding additives having a configuration capable of trapping a combustion gas such as pores, to the resin composition forming the spacer 21, it is possible to form an insulating glass unit 12 that can improve fire resistance performance and can pass the fire resistance test defined by ISO 834-1:1999.

### [Manufacturing method]

Next, a method of manufacturing the insulating glass units 10, 11, and 12 according to the first, second, and third embodiments will be described.

In a kneading process, butyl type rubber, a crystalline polyolefin and an inorganic filler, and a desiccant are uniformly kneaded and dispersed at a temperature of 110 °C to 200 °C for a time period ranging from 10 minutes to 3 hours to provide a thermoplastic resin composition for a spacer with JIS A hardness of 10 to 90. In order to obtain the thermoplastic resin composition for the spacer 21 of the insulating glass unit 12 according to the third embodiment, an inorganic filler and a desiccant that satisfy the conditions described in the third embodiment are added.

As the kneading time increases, the dispersion degree of the thermoplastic resin composition improves; the roughness of the spacer of the insulating glass unit decreases, the adhesiveness between the spacer and the glass sheet improves; and the long-term reliability of the insulating glass unit improves, which are preferable. More specifically, the kneading time is 15 minutes or more, and even more preferably, 30 minutes or more. In order to reduce the manufacturing time of the insulating glass unit, the kneading time is preferably 3 hours or less, 2.5 hours or less, and 2 hours or less, respectively.

In addition, preferably, the thermoplastic resin composition is manufactured by mixing the butyl type rubber and the crystalline polyolefin at least as described above at a temperature not less than the crystalline melting point of the crystalline polyolefin and not more than the decomposition point of the butyl type rubber. The mixing temperature is 110 °C to 200 °C, and particularly preferably 120 °C to 180 °C. Other formulations and additives may be mixed at the same time, either before or after mixing. Mixing at 110 °C to 180 °C improves the dispersion degree of the resin composition, improves the adhesion of the spacer of the insulating glass unit to the glass sheets, and enhances the long-term reliability of the insulating glass unit.

The compositions of the present invention are substantially thermoplastic compositions that can be mixed in a mixer such as a conventional melt mixing extruder and a kneader. In addition, molding may be carried out in succession with the above mixing operation. The composition can be also manufactured into a molding material, such as a pellet, followed by molding. A melt molding method, such as extrusion or injection molding, can be used for molding.

In addition, the insulating glass unit can be manufactured by placing the molded product at the end of an insulating glass material in which two or more glass sheets are disposed opposite to each other in succession to the molding operation. In this case, by using the high temperature composition extruded from the molding machine, a high adhesiveness with the glass sheets can be obtained. Apparatuses such as applicators can be also applied to the insulating glass materials while controlling the temperature drop of the composition. Preferably, the device has a heating function.

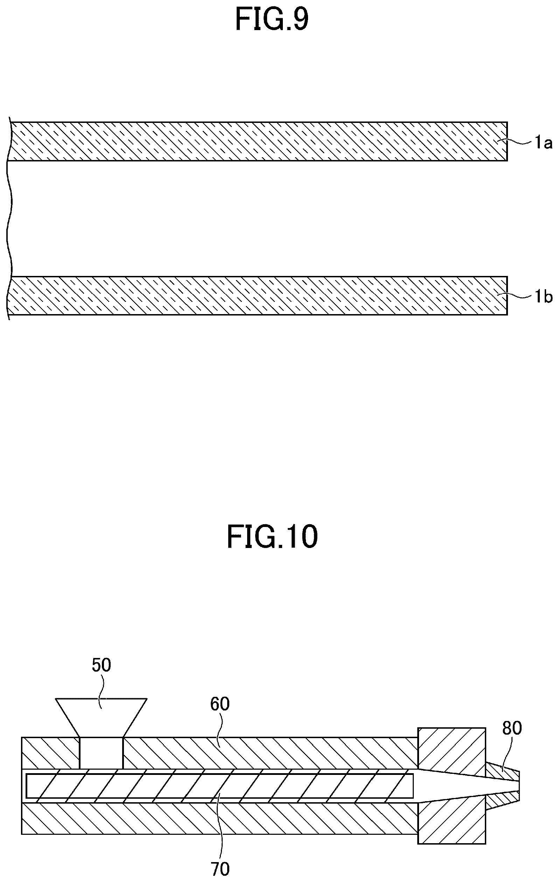

FIG. 9 is a diagram illustrating an example of a glass plate arrangement process. In the glass plate arrangement process, two glass plates 1a and 1b, or 1c and 1d are arranged facing each other. When the insulating glass units 11, 12 according to the second and third embodiments are manufactured, a process of applying an adhesive to the region where the spacer 20 is provided and then forming an adhesive layer 40 is provided prior to this step. As shown in FIGS. 2 and 3, as necessary, the adhesive layer 40 may be optionally provided in a region larger than the spacer 20, 21 that is, a region containing the spacer 20, 21 and further larger than the spacer 20, 21, or alternatively may be formed in a region smaller than the spacer 20, 21. Moreover, it goes without saying that the adhesive layer 40 may be formed in the same region as the spacer 20, 21. After the adhesive is air-dried, the two glass plates 1a and 1b are held at a predetermined distance (for example, 6 mm and 12 mm) as shown in FIG. 9. However, the distance between the two glass plates 1a and 1b can be determined according to the application and is not limited thereto.

On the other hand, when the insulating glass 10 according to the first embodiment is manufactured, the two glass plates 1a and 1b, which are not coated with any coating, are disposed facing each other at a predetermined distance. This is the same as the case where the adhesive layer 40 is not provided in the third embodiment.

Next, the above-mentioned thermoplastic composition is formed by melting the thermoplastic composition at a temperature of, for example, 150 °C or less, for example, at a predetermined temperature in a range of 110 to 130 °C, while using a general-purpose extruder having a cylinder of suitable diameter as shown in FIG. 10, and by disposing the thermoplastic composition between the two glass sheets while extruding the thermoplastic composition from a die having a suitable tip shape. A typical extruder may be used as the extruder, and the extruder may have a configuration, as shown in FIG. 10, such that a molten thermoplastic composition is fed from a hopper 50 and the molten thermoplastic composition fed into a barrel 60 is pushed forward by a screw 70 and extruded from a tip die 80 into a predetermined region.

Herein, in the conventional forming process, a spacer material has high viscosity, and thermoplastic resin composition needs to be heated to a high temperature of about 180 °C or more. However, the thermoplastic resin composition used in the insulating glass unit 10, 11 and 12 in accordance with the present embodiment is configured to be able to be processed by extrusion molding at a temperature of 150 °C or less, so that a predetermined region between two glass sheets 1a and 1b can be filled with the spacer 20, 21 at a low temperature and extrusion molding can be performed. After the molten thermoplastic composition is fed into the predetermined region between the glass sheets 1a and 1b, the two glass sheets 1a and 1b are pressurized from the outside, and the two glass sheets 1a and 1b are fixed. The thermoplastic resin composition is then cooled and solidified to form the spacer 20. This completes the insulating glass unit 10, 11 and 12, as shown in FIG. 1, FIG. 2 or FIG. 3. In addition, because the thermoplastic resin composition is already at a high temperature during pressurization, it need not be heated or may be further heated.

The method of double-grazing is only an example, and the method of manufacturing the insulating glass unit according to the present invention is not limited to the above-described method. For example, a spacer having a desired shape may be molded from the resin composition in advance, and the spacer may be bonded by thermal compression bonding, for example, with two sheets of glass.

### [Working Examples]

Hereinafter, working examples of producing insulating glass according to the present embodiments will be described.

### <<Examples of Resin Compositions for Spacers>>

FIG. 12 shows Composition Examples 1 to 5 (3 and 4 for reference only) corresponding to Examples and Reference Examples and Comparative Examples 1 and 2. Each value represents a mass proportion with respect to 100 parts by mass. As for the butyl type rubber, four types of butyl type rubber having different number-average molecular weights are used. Therefore, the composition including each type is shown.

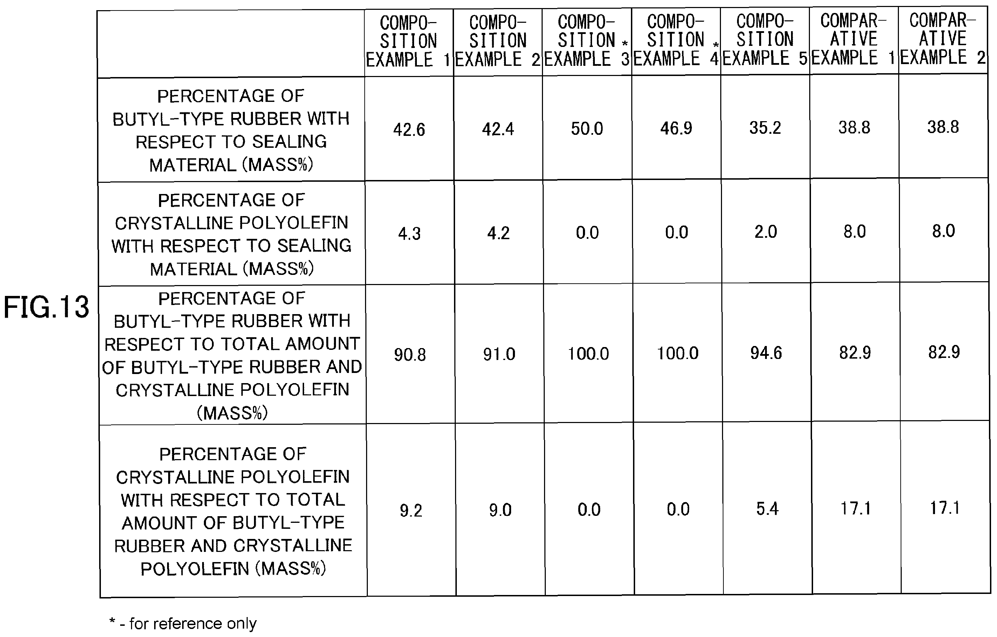

FIG. 13 is a diagram showing an overall composition shown in FIG. 12 converted into a percentage of butyl-type rubber and crystalline polyolefin. FIG. 14 is a diagram showing an overall composition shown in FIG. 12 by converting a proportion of the inorganic filler with respect to the total 100 parts by weight of the butyl-type rubber and the crystalline polyolefin. FIGS. 13 and 14 are shown to facilitate comparison with the claims.

In FIG. 12, the high molecular weight butyl-type rubber PIB-A shows the polyisobutylene having the number average molecular weight Mn of 170000; the high molecular weight butyl-type rubber IIR shows the butyl-type rubber having the number average molecular weight Mn of 76000; the low molecular weight butyl-type rubber PIB-B shows the polyisobutylene having the number average molecular weight Mn of 41000; and the low molecular weight butyl-type rubber PIB-C shows the polyisobutylene having the number average molecular weight Mn of 29000.

The number average molecular weights Mn of these butyl-type rubbers were measured using a THF solvent and a polystyrene standard sample using a size exclusion chromatography device manufactured by Tosoh Corporation (main body: HLC-8220 GPC, RI detector guard column: TSKgen guard column SuperHZ-L, column: TSKgen SuperHZ2000, TSKgel SuperHZ2500, and TSKgel SuperHZ4000).

As for crystalline polyolefins, HDPE shows a high density polyethylene with a melting point of 133 °C at a melt flow rate MFR of 20 g / 10 min (according to JIS K6922-2). Also, LDPE shows low density polyethylene with a melting point of 102 °C at a melt flow rate MFR of 45 g/10 min (according to JIS K6922-2). LDPE LC701 also exhibits low density polyethylene with a melting point of 106 °C at a melting flow rate MFR of 14 g/10 min (according to JIS K6922-2). Furthermore, the modified PE has a melting point of 98 °C with a melt flow rate MFR of 80 g / 10 min (according to JIS K6922-2), indicating polyethylene with an introduced acid anhydride and acrylic acid ester.

As for the tackifier, a DCPD (dicyclopentadiene) type hydrogenated hydrocarbon resin with a softening point of 125 °C was used.

As for the inorganic filler, an inorganic filler containing talc having an average particle size of 4.5 µm and high abrasion furnace type carbon black was used.

A 4A type zeolite powder was used as a desiccant. Phenol type antioxidants were used as an additive.

The composition shown in FIG. 12, was uniformly kneaded at a temperature of 110 °C to 200 °C for a time ranging from 10 minutes to 3 hours, and a thermoplastic resin composition for spacers with JIS A hardness of 10 to 90 was obtained.

### <<Examples of Insulating Glass Unit>>

Next, the results of the evaluation of the insulating glass using the resin compositions for spacers of Examples 1 to 5 (3 and 4 for reference only) and Comparative Examples 1 and 2 described above are shown.

In any example, the thermoplastic resin composition of the spacer material was extruded using a rubber extruder having a cylinder with a diameter of 40 mm to maintain a 6 mm or 12 mm distance between two float glass sheets of size 350 * 500 mm, 3 mm or 5 mm in thickness, with a spacer extruded on the outer periphery of the glass sheets to obtain the insulating glass 11 having the configuration shown in FIG. 2.

FIG. 15 is a table showing Composition Examples 1 to 5 (3 and 4 for reference only) corresponding to Examples 1 to 5 (3 and 4 for reference only) and the evaluation results of Comparative Examples 1 and 2.

The evaluation method of the evaluation items shown in FIG. 15 is as follows.

The dispersion degree was measured according to the ISO 11345:2006 E method using a Disper-Tester 3000 rubber filler testing machine manufactured by Montech.

As for the adhesiveness, the interface between the glass sheet and the spacer was observed, and a case where there was no gap (bubble) between the glass sheet and the spacer was made acceptable, and a case where there was a gap (bubble) was made unacceptable.

The loss tangent of a sample having a diameter of 25 mm and a thickness of 0.6 mm was measured in a shear mode, at 1 Hz, and at a deformation amount of 5% with a sample shape according to JIS K 6394:2007 using the rheometer MCR 301 manufactured by Anton Paar GmbH.

As for melt viscosity, Capillogragh 1C manufactured by Toyo Seiki Seisaku-sho, Ltd. was used. As for capillary, capillary length of 10 mm and capillary diameter of 2 mm were used. As for a furnace, a furnace having a furnace body diameter of 9.55 mm was used. The melt viscosity at a temperature of 120 °C and a shear rate of 100/s was used as the reference. Acceptance was defined as 0.6 kPa·s or more and 7.0 kPa·s or less.

As for the storage modulus (dynamic elastic modulus), DVA-200, a dynamic viscoelasticity measuring device manufactured by IT Measuring Co., Ltd., was used, and a tensile test was conducted in which the temperature was raised at 5 °C/min in a constant-speed temperature rising mode; for a sample with length between grips of 20 mm; the width of 5 mm; and the thickness of 0.6 mm; where the deformation was 0.1%; the static/dynamic ratio was 2; and the frequency was 1 Hz. The storage elastic modulus at a temperature of 25 °C was used as a reference. A value of 15 MPa or more and 60 MPa or less was considered acceptable.

As for sheet misalignment test, the obtained glass sheet of one side of each insulating glass was fixed, and the load of 13 kg was applied to the other glass sheet, and the downward displacement of the glass sheet of the load bearing side was measured under the temperature conditions of 25 °C. The displacement of 0.5 mm or less in 20 minutes was considered acceptable.

Accelerated durability tests were performed on insulating glass with a 6 mm thick spacer in accordance with JIS R 3209. JIS 3 classification determinations were recorded.

Dew point measurements were performed according to the apparatus and method described in JIS R3209.

As shown in FIG. 15, as for Examples 1 to 5 (3 and 4 for reference only), the dispersion degree was 25% or more and the adhesiveness was acceptable. In contrast, in Comparative Examples 1 to 2, the dispersion degree was less than 25%, and the adhesiveness was unacceptable. Thus, the results indicate that the insulating glass unit 11 according to Examples 1 to 5 (3 and 4 for reference only) has higher dispersion degrees than those of the insulating glass units according to Comparative Examples 1 to 2 and achieves the insulating glass unit 11 having an improved adhesiveness.

### [Examples of Fire Blocking Performance Test]

As for the insulating glass unit of Example 5, a fire resistance test was also conducted in accordance with ISO 834-1:1999. That is, the spacer having a composite described in Example 5, a wired glass sheet, and a Low-E glass sheet were used to form the insulating glass unit 12.

The size of the insulating glass unit was 900 × 2000 mm. The glass structure was as follows: a wired glass sheet of6.8 mm, an air space layer of 12 mm, and a Low-E (Low Emissivity) glass sheet of 5 mm disposed from the heated surface side. The overall configuration of the insulating glass unit is the same as that of FIG. 3.

Zeolite used for the spacer had a particle size of 4 to 6 µm for the median diameter d50, a nitrogen specific surface area of 70 to 105 m²/g for carbon black, a particle size of 4.5 µm for the median diameter d50, and a residual mass was 40% when the spacer was heated to 800 °C.

As described in FIG. 4 to 6, a 20-minute fire blocking performance test was performed according to ISO 834-1:1999. The test was performed according to the layout pattern likely to be unacceptable shown in FIG. 8.

Acceptance criteria included no flame ejection to the non-heated side for more than 10 seconds, no flame to the non-heated side for more than 10 seconds, and no damage or clearance, such as a breakage through which flames can pass.

The result of the test was acceptable.

### [Comparative Example 3]

In Comparative Example 3, a commercially available "Naftsarme (TM) BU-TPS" (manufactured by ift Rosenheim) was used as a spacer 120. The spacer is mainly formed of butyl type rubber.

As shown in FIG. 16, an insulating glass unit was produced having a configuration including a spacer 120 mainly made of a butyl type rubber disposed on the central side and a secondary seal 121 disposed on the outside so as to surround the spacer 120. A polysulfide (SM9000) manufactured by The Yokohama Rubber Co., Ltd. was used as the secondary seal 121.

Similar to Example 5, the size of the insulating glass unit was made 900 × 2000 mm. The glass structure was constituted of a wired glass sheet of 6.8 mm, an air space layer of 12 mm, and a Low-E glass sheet of 5 mm disposed from the heated surface side.

Testing and acceptance conditions were made the same as those of Example 5, and a 20-minute fire blocking performance test was performed according to ISO 834-1:1999.

The Low-E glass sheet was damaged and dropped at 13 minutes and 40 seconds, and the test result was unacceptable.

### [Comparative Example 4]

In Comparative Example 4, a commercially available SWISSPACER (Registered Trade Mark) manufactured by Saint-Gobain K.K. was used as the spacer. The main component of the spacer was resin.

As shown in FIG. 17, an insulating glass unit was produced in a configuration including a resin-based spacer 120 and a primary seal 121 disposed on the central side, and a secondary seal 122 so as to surround the outer side of the primary seal 121. The inside of the spacer 120 is filled with a desiccant 123. As the primary seal 121, an SM 488 manufactured by The Yokohama Rubber Co., Ltd. was used, and a polysulfide (SM 9000) manufactured by The Yokohama Rubber Co., Ltd. was used as the secondary seal 122.

Similar to Example 5, the size of the insulating glass unit was made 900 × 2000 mm. The glass structure was constituted of a wired glass sheet of 6.8 mm, an air space layer of 12 mm, and a Low-E glass sheet of 5 mm disposed from the heated surface side.

Testing and acceptance conditions were the same as those in Example 5, and a 20-minute fire blocking performance test was performed according to ISO 834-1:1999.

The Low-E glass sheet was damaged and dropped at 19 minutes and 30 seconds, and the test result was unacceptable.

Thus, the insulating glass sheet in accordance with Example 5 passed the fire blocking performance test and demonstrated an improved fire retardance performance.

As described above, the spacer and the insulating glass unit according to the present embodiment have an improved adhesiveness between the spacer and the glass sheet, an improved long-term reliability of the insulating glass unit, and an improved performance in fire resistance performance.

### [Description of Symbols]

1a, 1b, 1c, 1d glass sheet
10, 11, 12 insulating glass unit
20, 21 spacer
30 air space layer
40 adhesive layer
50 hopper
60 barrel
70 screw
80 die

## Claims

1. An insulating glass unit including two or more glass sheets disposed to face each other via a spacer interposed between the glass sheets so as to form an air space layer between the glass sheets, **characterized in that**
the spacer is formed of a thermoplastic resin composition having a JIS A hardness of 10 to 90 at 25 °C, the thermoplastic resin composition containing a butyl type rubber, a crystalline polyolefin, a desiccant and an inorganic filler,
a percentage of the butyl type rubber is 90 to 100 mass%, and a percentage of the crystalline polyolefin is 1 to 10 mass% with respect to a total amount of the butyl type rubber and the crystalline polyolefin,
a proportion of the inorganic filler is 200 parts by mass or less with respect to a total of 100 parts by mass of the butyl type rubber and the crystalline polyolefin, and
a percentage of dispersion defined by ISO 11345:2006 E method is 25% or more,
wherein the butyl type rubber contains a high molecular weight butyl type rubber and a low molecular weight butyl type rubber,
the high molecular weight butyl type rubber has a number average molecular weight of 55000 or more and 150000 or less, and
the low molecular weight butyl type rubber has a number average molecular weight of 35000 or more and 50000 or less.

2. The insulating glass unit as claimed in claim 1, wherein the thermoplastic resin composition has a loss tangent of 0.65 or lower, the loss tangent being defined by JIS K 6394:2007 at 50 °C.

3. The insulating glass unit as claimed in claim 1 or 2, wherein a ratio A/B of loss tangent A of the thermoplastic resin composition defined by JIS K 6394:2007 at 150 °C to a loss tangent B of the thermoplastic resin composition defined by the JIS K 6394:2007 at 50 °C is 1.9 or more.

4. The insulating glass unit as claimed in any one of claims 1 to 3,
wherein the thermoplastic resin composition has a melt viscosity of 0.6 kPa·s or more and 7.0 kPa·s or less at 120 °C, and
wherein the thermoplastic resin composition has a storage elastic modulus of 15 MPa or more and 60 MPa or less at 25 °C.

5. The insulating glass unit as claimed in any one of claims 1 to 4, wherein the high molecular weight butyl type rubber and the low molecular weight butyl type rubber are formed of butyl rubber or polyisobutylene.

6. The insulating glass unit as claimed in any one of claims 1 to 5, wherein the spacer is adhered to the glass sheets by adhesive.

7. A sealing material for an insulating glass unit usable as a spacer of the insulating glass unit including two or more glass sheets disposed to face each other so as to form an air space layer between the glass sheets by disposing the spacer between the glass sheets, **characterized in that**
the sealing material is formed of a thermoplastic resin composition having a JIS A hardness of 10 to 90 at 25 °C, the thermoplastic resin composition containing a butyl type rubber, a crystalline polyolefin, a desiccant and an inorganic filler,
a percentage of the butyl type rubber is 90 to 100 mass%, and a percentage of the crystalline polyolefin is 1 to 10 mass% with respect to a total amount of the butyl type rubber and the crystalline polyolefin,
a proportion of the inorganic filler is 200 parts by mass or less with respect to a total of 100 parts by mass of the butyl type rubber and the crystalline polyolefin, and
a percentage of dispersion defined by ISO 11345:2006 E method is 25% or more,
wherein the butyl type rubber contains a high molecular weight butyl type rubber and a low molecular weight butyl type rubber,
the high molecular weight butyl type rubber has a number average molecular weight of 55000 or more and 150000 or less, and
the low molecular weight butyl type rubber has a number average molecular weight of 35000 or more and 50000 or less.

8. A method of manufacturing an insulating glass unit, **characterized by**
a kneading step of obtaining a spacer material formed of a thermoplastic resin composition having a JIS A hardness of 10 to 90 at 25 °C, by kneading the butyl type rubber, the thermoplastic resin composition containing a butyl type rubber, a crystalline polyolefin, an inorganic filler and a desiccant, for 10 minutes to 3 hours, the thermoplastic resin composition containing a butyl type rubber, a crystalline polyolefin, an inorganic filler and a desiccant, a percentage of the butyl type rubber being 90 to 100 mass%, and a percentage of the crystalline polyolefin being 1 to 10 mass% with respect to a total amount of the butyl type rubber and the crystalline polyolefin, a proportion of the inorganic filler being 200 parts by mass or less with respect to a total of 100 parts by mass of the butyl type rubber and the crystalline polyolefin, and a percentage of dispersion defined by ISO 11345:2006 E method being 25% or more, by kneading the butyl type rubber, the crystalline polyolefin, the inorganic filler and the desiccant,
a step of disposing two glass sheets so as to face each other, and
a step of filling a predetermined region between the two glass sheets with the spacer material,
wherein the butyl type rubber contains a high molecular weight butyl type rubber and a low molecular weight butyl type rubber,
wherein a number average molecular weight of the high molecular weight butyl type rubber is 55000 or more and 150000 or less, and
wherein a number average molecular weight of the low molecular weight butyl type rubber is 35000 or more and 50000 or less.

9. The method of manufacturing the insulating glass unit as claimed in claim 8, wherein the butyl type rubber, the crystalline polyolefin and the inorganic filler are kneaded at a temperature of 110 to 200 °C in the kneading step.

10. The method of manufacturing the insulating glass unit as claimed in claim 8 or 9, wherein the predetermined region between the two glass sheets is filled with the spacer material at a temperature of 150 °C or lower in the filling step.

11. The method of manufacturing the insulating glass unit as claimed in any one of claims 8 to 10, wherein the filling step is performed by extrusion molding.

12. The method of manufacturing the insulating glass unit as claimed in any one of claims 8 to 11, further **characterized by** a step of fixing the two glass sheets by pressurizing the two glass sheets from the outside after the filling step.

13. The method of manufacturing the insulating glass unit as claimed in any one of claims 8 to 12, further **characterized by** a step of applying an adhesive to the predetermined region of each of the two glass sheets before the step of disposing the two glass sheets so as to face each other.

## Patentansprüche

1. Isolierglaseinheit, enthaltend zwei oder mehr Glasscheiben, die so angeordnet sind, dass sie einander über einen Abstandshalter gegenüberliegen, der zwischen den Glasscheiben angeordnet ist, um eine Luftraumschicht zwischen den Glasscheiben zu bilden, **dadurch gekennzeichnet, dass**
der Abstandshalter aus einer thermoplastischen Harzzusammensetzung mit einer JIS A-Härte von 10 bis 90 bei 25°C gebildet ist, wobei die thermoplastische Harzzusammensetzung einen Kautschuk vom Butyl-Typ, ein kristallines Polyolefin, ein Trockenmittel und einen anorganischen Füllstoff enthält,
wobei ein Prozentsatz des Kautschuks vom Butyl-Typ 90 bis 100 Massen-% und ein Prozentsatz des kristallinen Polyolefins 1 bis 10 Massen-% in Bezug auf eine Gesamtmenge des Kautschuks vom Butyl-Typ und des kristallinen Polyolefins betragen,
wobei ein Anteil des anorganischen Füllstoffs 200 Massenteile oder weniger in Bezug auf eine Gesamtmenge von 100 Massenteile des Kautschuks vom Butyl-Typ und des kristallinen Polyolefins beträgt, und
wobei ein Prozentsatz der Dispersion, definiert durch das Verfahren ISO 11345:2006 E, 25% oder mehr beträgt,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
wobei der Kautschuk vom Butyl-Typ mit hohem Molekulargewicht ein zahlenmittleres Molekulargewicht von 55000 oder mehr und 150000 oder weniger aufweist, und
wobei der Kautschuk vom Butyl-Typ mit niedrigem Molekulargewicht ein zahlenmittleres Molekulargewicht von 35000 oder mehr und 50000 oder weniger aufweist.

2. Isolierglaseinheit wie in Anspruch 1 beansprucht, wobei die thermoplastische Harzzusammensetzung einen Verlusttangens von 0,65 oder weniger aufweist, wobei der Verlusttangens durch JIS K 6394:2007 bei 50°C definiert ist.

3. Isolierglaseinheit wie in Anspruch 1 oder 2 beansprucht, wobei ein Verhältnis A/B des Verlusttangens A der thermoplastischen Harzzusammensetzung, definiert durch JIS K 6394:2007 bei 150°C, zu einem Verlusttangens B der thermoplastischen Harzzusammensetzung, definiert durch JIS K 6394:2007 bei 50°C, 1,9 oder mehr beträgt.

4. Isolierglaseinheit wie in einem der Ansprüche 1 bis 3 beansprucht,
wobei die thermoplastische Harzzusammensetzung eine Schmelzviskosität von 0,6 kPa·s oder mehr und 7,0 kPa·s oder weniger bei 120°C aufweist, und
wobei die thermoplastische Harzzusammensetzung ein Speicherelastizitätsmodul von 15 MPa oder mehr und 60 MPa oder weniger bei 25°C aufweist.

5. Isolierglaseinheit wie in einem der Ansprüche 1 bis 4 beansprucht, wobei der Kautschuk vom Butyl-Typ mit hohem Molekulargewicht und der Kautschuk vom Butyl-Typ mit niedrigem Molekulargewicht aus Butylkautschuk oder Polyisobutylen gebildet sind.

6. Isolierglaseinheit wie in einem der Ansprüche 1 bis 5 beansprucht, wobei der Abstandshalter mit den Glasscheiben durch Haftmittel verbunden ist.

7. Dichtungsmaterial für eine Isolierglaseinheit verwendbar als Abstandshalter der Isolierglaseinheit, enthaltend zwei oder mehr Glasscheiben, die so angeordnet sind, dass sie einander über den Abstandshalter gegenüberliegen, der zwischen den Glasscheiben angeordnet ist, um eine Luftraumschicht zwischen den Glasscheiben zu bilden, **dadurch gekennzeichnet, dass**
das Dichtungsmaterial aus einer thermoplastischen Harzzusammensetzung mit einer JIS A-Härte von 10 bis 90 bei 25°C gebildet ist, wobei die thermoplastische Harzzusammensetzung, einen Kautschuk vom Butyl-Typ, ein kristallines Polyolefin, ein Trockenmittel und einen anorganischen Füllstoff enthält,
wobei ein Prozentsatz des Kautschuks vom Butyl-Typ 90 bis 100 Massen-% und ein Prozentsatz des kristallinen Polyolefins 1 bis 10 Massen-% in Bezug auf eine Gesamtmenge des Kautschuks vom Butyl-Typ und des kristallinen Polyolefins betragen,
wobei ein Anteil des anorganischen Füllstoffs 200 Massenteile oder weniger in Bezug auf eine Gesamtmenge von 100 Massenteile des Kautschuks vom Butyl-Typ und des kristallinen Polyolefins beträgt, und
wobei ein Prozentsatz der Dispersion, definiert durch das Verfahren ISO 11345:2006 E, 25% oder mehr beträgt,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
wobei der Kautschuk vom Butyl-Typ mit hohem Molekulargewicht ein zahlenmittleres Molekulargewicht von 55000 oder mehr und 150000 oder weniger aufweist, und
wobei der Kautschuk vom Butyl-Typ mit niedrigem Molekulargewicht ein zahlenmittleres Molekulargewicht von 35000 oder mehr und 50000 oder weniger aufweist.

8. Verfahren zur Herstellung einer Isolierglaseinheit, **gekennzeichnet durch**
einen Schritt des Knetens zum Erhalten eines Abstandshaltermaterials, das aus einer thermoplastischen Harzzusammensetzung mit einer JIS A-Härte von 10 bis 90 bei 25°C gebildet ist, durch Kneten des Kautschuks vom Butyl-Typ, wobei die thermoplastische Harzzusammensetzung einen Kautschuk vom Butyl-Typ, ein kristallines Polyolefin, einen anorganischen Füllstoff und ein Trockenmittel enthält, für 10 Minuten bis 3 Stunden, wobei die thermoplastische Harzzusammensetzung einen Kautschuk vom Butyl-Typ, ein kristallines Polyolefin, einen anorganischen Füllstoff und ein Trockenmittel enthält, wobei ein Prozentsatz des Kautschuks vom Butyl-Typ 90 bis 100 Massen-% und ein Prozentsatz des kristallinen Polyolefins 1 bis 10 Massen-% in Bezug auf eine Gesamtmenge des Kautschuks vom Butyl-Typ und des kristallinen Polyolefins betragen, wobei ein Anteil des anorganischen Füllstoffs 200 Massenteile oder weniger in Bezug auf eine Gesamtmenge von 100 Massenteile des Kautschuks vom Butyl-Typ und des kristallinen Polyolefins beträgt, und wobei ein Prozentsatz der Dispersion, definiert durch das Verfahren ISO 11345:2006 E, 25% oder mehr beträgt, durch Kneten des Kautschuks vom Butyl-Typ, des kristallinen Polyolefins, des anorganischen Füllstoffs und des Trocknungsmittels,
einen Schritt des Anordnens von zwei Glasscheiben, so dass sie einander gegenüberliegen, und
einen Schritt des Füllens eines vorbestimmten Bereichs zwischen den beiden Glasscheiben mit dem Abstandshaltermaterial,
wobei der Kautschuk vom Butyl-Typ einen Kautschuk vom Butyl-Typ mit hohem Molekulargewicht und einen Kautschuk vom Butyl-Typ mit niedrigem Molekulargewicht enthält,
wobei der Kautschuk vom Butyl-Typ mit hohem Molekulargewicht ein zahlenmittleres Molekulargewicht von 55000 oder mehr und 150000 oder weniger aufweist, und
wobei der Kautschuk vom Butyl-Typ mit niedrigem Molekulargewicht ein zahlenmittleres Molekulargewicht von 35000 oder mehr und 50000 oder weniger aufweist.

9. Verfahren zur Herstellung der Isolierglaseinheit wie in Anspruch 8 beansprucht, wobei der Kautschuk vom Butyl-Typ, das kristalline Polyolefin und der anorganische Füllstoff bei einer Temperatur von 110 bis 200°C im Schritt des Knetens geknetet werden.

10. Verfahren zur Herstellung der Isolierglaseinheit wie in Anspruch 8 oder 9 beansprucht, wobei der vorbestimmte Bereich zwischen den beiden Glasscheiben mit dem Abstandshaltermaterial bei einer Temperatur von 150°C oder weniger im Schritt des Füllens befüllt wird.

11. Verfahren zur Herstellung der Isolierglaseinheit wie in einem der Ansprüche 8 bis 10 beansprucht, wobei der Schritt des Füllens durch Extrusionsformen durchgeführt wird.

12. Verfahren zur Herstellung der Isolierglaseinheit wie in einem der Ansprüche 8 bis 11 beansprucht, ferner **gekennzeichnet durch** einen Schritt der Fixierung der beiden Glasscheiben durch Druckbeaufschlagung der beiden Glasscheiben von außen nach dem Schritt des Füllens.

13. Verfahren zur Herstellung der Isolierglaseinheit wie in einem der Ansprüche 8 bis 12 beansprucht, ferner **gekennzeichnet durch** einen Schritt des Auftragens eines Haftmittels auf den vorbestimmten Bereich jeder der beiden Glasscheiben vor dem Schritt des Anordnens der beiden Glasscheiben, so dass sie einander gegenüberliegen.

## Revendications

1. Unité de verre isolant incluant deux feuilles de verre ou plus disposées pour se faire face l'une l'autre par le biais d'un écarteur interposé entre les feuilles de verre de manière à former une couche de vide d'air entre les feuilles de verre, **caractérisée en ce que**
l'écarteur est formé d'une composition de résine thermoplastique ayant une dureté JIS A de 10 à 90 à 25 °C, la composition de résine thermoplastique contenant un caoutchouc de type butyle, une polyoléfine cristalline, un dessiccatif et une charge inorganique,
un pourcentage du caoutchouc de type butyle est de 90 à 100 % en masse, et un pourcentage de la polyoléfine cristalline est de 1 à 10 % en masse par rapport à une quantité totale du caoutchouc de type butyle et de la polyoléfine cristalline,
une proportion de la charge inorganique est de 200 parties en masse ou moins par rapport à un total de 100 parties en masse du caoutchouc de type butyle et de la polyoléfine cristalline, et
un pourcentage de dispersion défini par le procédé ISO 11345 : 2006 E est de 25 % ou plus,
dans laquelle le caoutchouc de type butyle contient un caoutchouc de type butyle à poids moléculaire élevé et un caoutchouc de type butyle à faible poids moléculaire,
le caoutchouc de type butyle à poids moléculaire élevé a un poids moléculaire moyen en nombre de 55 000 ou plus et 150 000 ou moins, et
le caoutchouc de type butyle à faible poids moléculaire a un poids moléculaire moyen en nombre de 35 000 ou plus et 50 000 ou moins.

2. Unité de verre isolant selon la revendication 1, dans laquelle la composition de résine thermoplastique a un facteur de dissipation électrique de 0,65 ou inférieur, le facteur de dissipation électrique étant défini par JIS K 6394 : 2007 à 50 °C.

3. Unité de verre isolant selon la revendication 1 ou 2, dans laquelle un rapport A/B du facteur de dissipation électrique A de la composition de résine thermoplastique défini par JIS K 6394 : 2007 à 150 °C sur un facteur de dissipation électrique B de la composition de résine thermoplastique défini par JIS K 6394 : 2007 à 50 °C est de 1,9 ou plus.

4. Unité de verre isolant selon l'une quelconque des revendications 1 à 3,
dans laquelle la composition de résine thermoplastique a une viscosité à l'état fondu de 0,6 kPa·s ou plus et 7,0 kPa·s ou moins à 120°C, et
dans laquelle la composition de résine thermoplastique a un module élastique de stockage de 15 MPa ou plus et 60 MPa ou moins à 25 °C.

5. Unité de verre isolant selon l'une quelconque des revendications 1 à 4, dans laquelle le caoutchouc de type butyle à poids moléculaire élevé et le caoutchouc de type butyle à faible poids moléculaire sont formés de caoutchouc butylique ou polyisobutylène.

6. Unité de verre isolant selon l'une quelconque des revendications 1 à 5, dans laquelle l'écarteur est collé aux feuilles de verre par de l'adhésif.

7. Matériau d'étanchéité pour une unité de verre isolant pouvant être utilisé comme un écarteur de l'unité de verre isolant incluant deux feuilles de verre ou plus disposées pour se faire face l'une l'autre de manière à former une couche de vide d'air entre les feuilles de verre en disposant l'écarteur entre les feuilles de verre, **caractérisé en ce que**
le matériau d'étanchéité est formé d'une composition de résine thermoplastique ayant une dureté JIS A de 10 à 90 à 25 °C, la composition de résine thermoplastique contenant un caoutchouc de type butyle, une polyoléfine cristalline, un dessiccatif et une charge inorganique,
un pourcentage du caoutchouc de type butyle est de 90 à 100 % en masse, et un pourcentage de la polyoléfine cristalline est de 1 à 10 % en masse par rapport à une quantité totale du caoutchouc de type butyle et de la polyoléfine cristalline,
une proportion de la charge inorganique est de 200 parties en masse ou moins par rapport à un total de 100 parties en masse du caoutchouc de type butyle et de la polyoléfine cristalline, et
un pourcentage de dispersion défini par le procédé ISO 11345 : 2006 E est de 25 % ou plus,
dans lequel le caoutchouc de type butyle contient un caoutchouc de type butyle à poids moléculaire élevé et un caoutchouc de type butyle à faible poids moléculaire,
le caoutchouc de type butyle à poids moléculaire élevé a un poids moléculaire moyen en nombre de 55 000 ou plus et 150 000 ou moins, et
le caoutchouc de type butyle à faible poids moléculaire a un poids moléculaire moyen en nombre de 35 000 ou plus et 50 000 ou moins.

8. Procédé de fabrication d'une unité de verre isolant, **caractérisé par**
une étape de malaxage consistant à obtenir un matériau d'écarteur formé d'une composition de résine thermoplastique ayant une dureté JIS A de 10 à 90 à 25 °C, en malaxant le caoutchouc de type butyle, la composition de résine thermoplastique contenant un caoutchouc de type butyle, une polyoléfine cristalline, une charge inorganique et un dessiccatif, pendant 10 minutes à 3 heures, la composition de résine thermoplastique contenant un caoutchouc de type butyle, une polyoléfine cristalline, une charge inorganique et un dessiccatif, un pourcentage du caoutchouc de type butyle étant de 90 à 100 % en masse, et un pourcentage de la polyoléfine cristalline étant de 1 à 10 % en masse par rapport à une quantité totale du caoutchouc de type butyle et de la polyoléfine cristalline, une proportion de la charge inorganique étant de 200 parties en masse ou moins par rapport à un total de 100 parties en masse du caoutchouc de type butyle et de la polyoléfine cristalline, et un pourcentage de dispersion défini par le procédé ISO 11345 : 2006 E étant de 25 % ou plus, en malaxant le caoutchouc de type butyle, la polyoléfine cristalline, la charge inorganique et le dessiccatif,
une étape consistant à disposer deux feuilles de verre de manière à se faire face l'une l'autre, et
une étape consistant à remplir une région prédéterminée entre les deux feuilles de verre du matériau d'écarteur,
dans lequel le caoutchouc de type butyle contient un caoutchouc de type butyle à poids moléculaire élevé et un caoutchouc de type butyle à faible poids moléculaire,
dans lequel un poids moléculaire moyen en nombre du caoutchouc de type butyle à poids moléculaire élevé est de 55 000 ou plus et 150 000 ou moins, et
dans lequel un poids moléculaire moyen en nombre du caoutchouc de type butyle à faible poids moléculaire est de 35 000 ou plus et 50 000 ou moins.

9. Procédé de fabrication de l'unité de verre isolant selon la revendication 8, dans lequel le caoutchouc de type butyle, la polyoléfine cristalline et la charge inorganique sont malaxés à une température de 110 à 200 °C dans l'étape de malaxage.

10. Procédé de fabrication de l'unité de verre isolant selon la revendication 8 ou 9, dans lequel la région prédéterminée entre les deux feuilles de verre est remplie du matériau d'écarteur à une température de 150 °C ou inférieure dans l'étape de remplissage.

11. Procédé de fabrication de l'unité de verre isolant selon l'une quelconque des revendications 8 à 10, dans lequel l'étape de remplissage est réalisée par moulage par extrusion.

12. Procédé de fabrication de l'unité de verre isolant selon l'une quelconque des revendications 8 à 11, **caractérisé en outre par** une étape de fixation des deux feuilles de verre en pressurisant les deux feuilles de verre de l'extérieur après l'étape de remplissage.

13. Procédé de fabrication de l'unité de verre isolant selon l'une quelconque des revendications 8 à 12, **caractérisé en outre par** une étape consistant à appliquer un adhésif à la région prédéterminée de chacune des deux feuilles de verre avant l'étape de disposition des deux feuilles de verre de manière à se faire face l'une l'autre.
